# FASCICULE DE BREVET EUROPEEN

(11) **EP 1 689 807 B1**
(45) Date de publication et mention de la délivrance du brevet: **17.08.2016**
(21) Numéro de dépôt: 04805518.0
(22) Date de dépôt: 23.11.2004
(51) Int. Cl.: C08G 83/00

(54) **NOUVEAUX DENDRIMERES A TERMINAISONS MONOPHOSPHONIQUES, LEUR PROCEDE DE PREPARATION ET LEUR UTILISATION.**
NEUE DENDRITISCHE POLYMERE MIT MONOPHOSPHONSÄURE-ENDGRUPPEN, HERSTELLUNGSVERFAHREN DAFÜR UND VERWENDUNG DAVON
NOVEL DENDRITIC POLYMERS HAVING MONOPHOSPHONIC TERMINATIONS, METHOD FOR PREPARING THEM, AND THEIR USE

(30) Priorité: 24.11.2003 FR 0313751
(43) Date de publication de la demande: 16.08.2006
(73) Titulaire: Rhodia UK Limited, Watford, Hertfordshire WD24 4QP (GB); CENTRE NATIONAL DE LA RECHERCHE SCIENTIFIQUE -CNRS-, 75016 Paris (FR)
(72) Inventeur: CAMINADE, Anne-Marie, F-31400 TOULOUSE (FR); MAJORAL, Jean-Pierre, F-31520 RAMONVILLE ST AGNE (FR); GRIFFE, Laurent, F-11000 CARCASSONNE (FR); TURRIN, Cédric, 31400 TOULOUSE (FR); METIVIER, Pascal, 75019 Paris (FR)
(74) Mandataire: Lavoix
(86) Numéro de dépôt international: PCT/FR2004/002989
(87) Numéro de publication internationale: WO 2005/052032

(56) Documents cités:
- WO-A-00/64975
- DD-A- 144 264
- FR-A1- 2 734 268
- KR-B- 9 602 224
- US-A- 4 783 500
- US-A- 4 871 779
- PATENT ABSTRACTS OF JAPAN vol. 0175, no. 91 (C-1125), 28 octobre 1993 (1993-10-28) & JP 05 178710 A (KAIYO KAGAKU KK), 20 juillet 1993 (1993-07-20)

## Description

Les dendrimères sont des macromolécules constituées de monomères qui s'associent selon un processus arborescent autour d'un coeur central plurifonctionnel.

Les dendrimères, appelées aussi « molécules cascade », sont des polymères fonctionnels hautement ramifiés de structure définie. Ces macromolécules sont effectivement des polymères puisqu'elles sont basées sur l'association d'unités répétitives. Cependant, les dendrimères diffèrent fondamentalement des polymères classiques dans la mesure où ils ont des propriétés propres dues à leur construction en arborescence. Le poids moléculaire et la forme des dendrimères peuvent être précisément contrôlés et toutes les fonctions sont situées à la terminaison des arborescences, formant une surface, ce qui les rend facilement accessibles.

Les dendrimères sont construits étape par étape, par la répétition d'une séquence de réaction permettant la multiplication de chaque unité répétitive et des fonctions terminales. Chaque séquence de réaction forme ce qui est appelé une « nouvelle génération ». La construction arborescente s'effectue par la répétition d'une séquence de réaction qui permet l'obtention à la fin de chaque cycle réactionnel d'une nouvelle génération et d'un nombre croissant de branches identiques. Après quelques générations, le dendrimère prend généralement une forme globulaire hautement ramifiée et plurifonctionnalisée grâce aux nombreuses fonctions terminales présentes en périphérie.

De tels polymères ont notamment été décrits par Launay et al., Angew. Chem. Int. Ed. Engl., 1994, 33, 15/16, 1589-1592, ou encore Launay et al., Journal of Organometallic Chemistry, 1997, 529, 51-58.

Le traitement des surfaces, par exemple pour leur protection met en oeuvre le phénomène d'adhésion. Celui-ci nécessite souvent la présence de groupes donneurs et accepteurs de liaisons hydrogène, sur la surface et/ou l'agenfi de protection. Il est donc désirable de mettre à disposition des agents présentant une forte potentialité de liaison hydrogène en tant qu'agent de traitement de surface.

Du fait de leur structure, les dendrimères présentent une forte densité de terminaisons et donc une forte densité fonctionnelle à leur périphérie. Il a donc été envisagé de préparer des dendrimères fonctionnels permettant la création de liaisons hydrogène dans le but de les utiliser en tant qu'agent de traitement de surface.

La fonction acide phosphonique est particulièrement propice à la formation de liaisons hydrogène. Il est donc souhaitable de préparer des dendrimères présentant des terminaisons à fonction acide phosphonique.

Des dendrimères à diverses fonctions phosphorées (phosphine, phosphinate, phosphate, phosphonate, phosphorane, spirophosphorane) ont notamment été décrits dans les articles cités ci-dessus ou la demande française FR 95 06 281.

Toutefois, aucun dendrimère présentant des terminaisons acide phosphonique libres, ou éventuellement sous forme de sels ou de l'ester méthylique correspondant n'est décrit. Il a en effet été jusqu'à ce jour impossible de préparer de telles fonctionnalisations sur les dendrimères. Plus précisément, il avait été impossible de préparer des dendrimères présentant la fonction acide phosphonique à partir des esters d'alkyle correspondants. Ceci a maintenant été rendu possible à partir de l'ester méthylique correspondant.

Les inventeurs ont maintenant découvert une réaction permettant d'accéder à ce type de fonctionnalisation terminale de type ester méthylique ou acide phosphonique sur les dendrimères.

Selon un premier objet, la présente invention concerne donc des dendrimères présentant une fonction terminale -PO(OMe)₂, ou -PO(OH)₂ ou les sels correspondants, à la terminaison de chaque arborescence.

Selon un second objet, la présente invention concerne également le procédé de préparation de tels dendrimères.

Selon un autre objet, la présente invention concerne également l'utilisation des dendrimères selon l'invention pour le traitement de surfaces.

La présente invention concerne donc des dendrimères caractérisés en ce qu'ils sont constitués:
- d'un noyau central § de valence m ;
- éventuellement des chaînes de générations en arborescence autour du noyau ;
- une chaîne intermédiaire à l'extrémité de chaque liaison autour du noyau, ou éventuellement à l'extrémité de chaque chaîne de génération, le cas échéant ; et
- un groupe terminal en arborescence à l'extrémité de chaque chaîne intermédiaire, de formule : 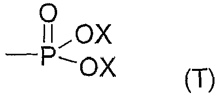
   où X représente un radical -Me, -H, ou /M⁺ où M⁺ est un cation,
   n représente la génération du dendrimère considéré ; il représente un entier compris entre 0 et 12.
   m représente un entier supérieur ou égal à 1.

Le plus souvent, les dendrimères de l'invention comportent des chaînes intermédiaires terminées par un groupe terminal :
- à l'extrémité de chaque chaîne de génération éventuellement présente ; ou
- à l'extrémité de chaque liaison autour du noyau non reliée à une chaîne de génération.

Les dendrimères de l'invention comprennent ainsi, en général, m bras liés au noyau central §, chacun de ces bras étant :
- un bras de type (1), à savoir un bras constitué par une chaîne intermédiaire terminée par un groupe terminal de formule (T) ; ou
- un bras de type (2), à savoir un bras constitué par une ou plusieurs chaînes de génération comportant à ses extrémités une chaîne intermédiaire terminée par un groupe terminal de formule (T).

Selon un mode de réalisation particulier, les dendrimères comportent uniquement des bras de type (1) liés au noyau central §.

Selon un autre mode de réalisation, les dendrimères ne comportent que des bras de type (2) liés au noyau central §.

Quel que soit le mode de réalisation, le noyau central § est constitué d'au moins un atome de valence m.

De préférence, le noyau central § présente au moins un atome de phosphore.

De préférence le noyau § est choisi parmi les groupes suivants : SPCl₃, P₃N₃Cl₆, P₃N₃Cl₈,

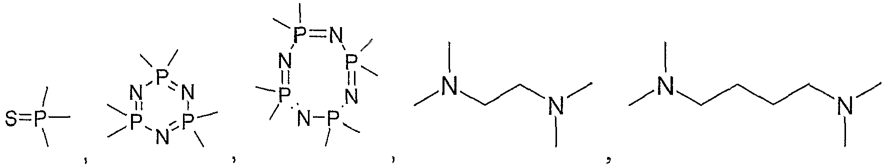

De préférence, le noyau central § est de formule :

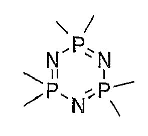

De préférence, n est compris entre 0 et 3.

De préférence, m est choisi parmi 3, 4 et 6.

De préférence, les dendrimères selon l'invention correspondent aux dendrimères commerciaux auxquels a été greffé le groupe terminal -P(=O)(OX)₂.

Selon l'invention, lesdits dendrimères commerciaux sont notamment choisis parmi les dendrimères de type DAB-AM, PAMAM (Starbust^{®} notamment) présentant des fonctions terminales -NH₂, -OH ou -COOH, ou encore parmi les dendrimères de type PMMH, tels que Cyclophosphazène- ou Thiophosphoryl-PMMH, ou encore choisis parmi : 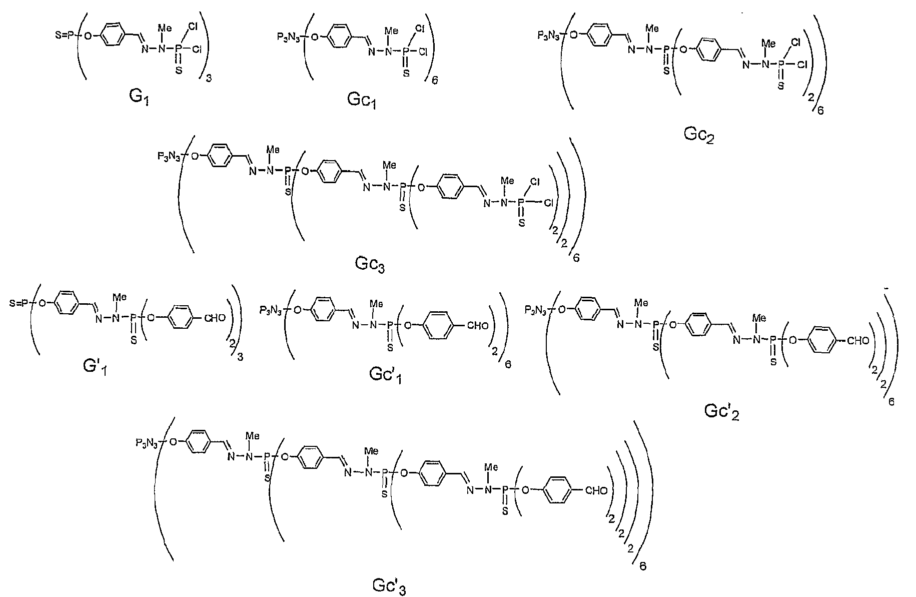 ainsi que les dendrimères de génération ultérieure.

Tous ces dendrimères sont commercialisés par Aldrich.

De préférence, M représente un élément du groupe IA, IIA, IIB ou IIIA de la classification périodique ; de préférence, M est choisi parmi les atomes de sodium, potassium, calcium, baryum, zinc, magnésium, lithium et aluminium, encore plus préférenfiiellement le sodium, le lithium et le potassium.

M⁺ est un cation d'un atome, par exemple un atome de métal, ou un cation dérivé de tout radical susceptible d'être stable sous forme de cation. Ledit cation peut être notamment choisi parmi les sels d'ammonium, seuls ou en mélange, notamment avec les tensio-actifs cationiques.

De préférence, M⁺ représente le cation d'une base azotée, tel que HNEt₃⁺.

Les chaînes de génération sont choisies parmi toute chaîne hydrocarbonée de 1 à 12 chaînons, linéaire ou ramifiée, contenant éventuellement une ou plusieurs double ou triple liaison, chacun desdits chaînons pouvant éventuellement être choisi parmi un hétéroatome, un groupe Aryle, Hétéroaryle, >C=O, >C=NR, chaque chaînon pouvant être éventuellement substitué par un ou plusieurs substituants choisi(s) parmi -Alkyle, -Hal, -NO₂, -NRR', -CN, -CF₃, -OH,-OAlkyle, -Aryle, -Aralkyle.
où

R et R', identiques ou différents, représentent indépendamment un atome d'hydrogène ou un radical -Alkyle, -Aryle, -Aralkyle ;

De préférence, les chaînes de génération, identiques ou différentes, sont représentées par la formule :

-A-B-C(D)=N-N(E)-(P(=G))< (C1)

où :
A représente un atome d'oxygène, soufre, phosphore ou un radical

   -NR- ;
B représente un radical -Aryle-, -Hétéroaryle-, -Alkyle-, chacun pouvant être éventuellement substitué par un atome d'Halogène ou un radical -NO₂,
   - NRR', -CN, -CF₃, -OH, -Alkyle, -Aryle, -Aralkyle ;
C représente l'atome de carbone,
D et E, identiques ou différents, représentent indépendamment un atome d'hydrogène, un radical -Alkyle, -OAlkyle, -Aryle, -Aralkyle, chacun pouvant être éventuellement substitué par un atome d'Halogène ou un radical -NO₂, -NRR', -CN, -CF₃, -OH, -Alkyle, -Aryle, -Aralkyle ;
G représente un atome de soufre, oxygène, soufre, sélénium, tellure ou un radical =NR ;
N représente l'atome d'azote ;
P représente l'atome de phosphore ;
< représente les 2 liaisons situées à l'extrémité de chaque chaîne de génération.

De préférence, dans la formule générale (C1) ci-dessus, A représente un atome d'oxygène.

De préférence, dans la formule générale (C1) ci-dessus, B représente un noyau phényle, éventuellement substitué par un atome d'halogène ou un radical -NO₂, -NRR', -CN, -CF₃, -OH, -Alkyle, -Aryle, -Aralkyle ; encore plus préférentiellement, B représente un noyau phényle non substitué.

De préférence, dans la formule générale (C1) citée ci-dessus, D représente un atome d'hydrogène.

De préférence, dans la formule générale (C1) citée ci-dessus, E représente un radical -Alkyle.

De préférence, dans la formule générale (C1) ci-dessus, G représente un atome de soufre.

Selon un autre aspect préféré, les chaînes de génération sont représentées par la formule :

-A'-(C=O)-N(R)-B'-N< (C1')

où
A' et B' représentent indépendamment un radical -Alkyle, -Alkényle, -Alkynyle, par un ou plusieurs substituants choisi(s) parmi -Alkyle, -Hal, -NO₂, -NRR', -CN, -CF₃, -OH, -OAlkyle, -Aryle, -Aralkyle ;
R, R' sont définis comme précédemment.

De préférence, A' représente -Alkyle-, encore plus préférentiellement -Ethyle. De préférence, B' représente -Alkyle-, encore plus préférentiellement -Ethyle.

De préférence, R représente un atome d'hydrogène.

Selon un autre aspect préféré, les chaînes de génération sont représentées par la formule :

-A"-N< (C1")

où
A" représente un radical -Alkyle, -Alkényle, -Alkynyle, par un ou plusieurs substituants choisi(s) parmi -Alkyle, -Hal, -NO₂, -NRR', -CN, -CF₃, -OH, -OAlkyle, -Aryle, -Aralkyle, où RR' sont définis comme précédemment.

De préférence, A" représente -Alkyle-, encore plus préférentiellement -Propyle-.

Selon un autre aspect préféré, les dendrimères selon l'invention de génération 1 ne comprennent pas de chaîne de génération. Notamment, dans le cas où la chaîne de génération est représentée par les formules (C1') ou (C1 "), les dendrimères correspondants de génération 1 ne comprennent pas de chaîne de génération.

Les chaînes intermédiaires sont choisies parmi toute chaîne hydrocarbonée de 1 à 12 chaînons, linéaire ou ramifiée, contenant éventuellement une ou plusieurs double ou triple liaison, chacun desdits chaînons pouvant éventuellement être choisi parmi un hétéroatome, un groupe Aryle, Hétéroaryle, >C=O, >C=NR, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle,
où R, R' sont définis comme précédemment.

De préférence, les chaînes intermédiaires présentent une simple liaison à leur extrémité.

De préférence, les chaînes intermédiaires, identiques ou différentes, sont représentées par la formule :

-J-K-L- (C2)

où
J représente un atome d'oxygène, soufre, ou un radical -NR- ;
K représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
L représente une chaîne hydrocarbonée de 1 à 6 chaînons, linéaire ou ramifiée, contenant éventuellement un ou plusieurs hétéroatomes, et/ou contenant éventuellement une ou plusieurs double ou triple liaison, chacun desdits maillons pouvant éventuellement être substitué par un ou plusieurs substituants choisi(s) parmi -OH, -NRR', -OAlkyle, -Alkyle, -Hal, -NO₂,-CN, -CF₃, -Aryle, -Aralkyle.

R et R', identiques ou différents, représentent indépendamment un atome d'hydrogène ou un radical -Alkyle, -Aryle, -Aralkyle.

De préférence, dans la formule (C2) ci-dessus, J représente un atome d'oxygène.

De préférence, dans la formule (C2) ci-dessus, K représente un noyau phényle, éventuellement substitué ; encore plus préférenfiellement, K représente un noyau phényle non substitué.

De préférence, dans la formule (C2) ci-dessus, L représente un radical -Alkyle-, -Alkényle- ou -Alkynyle-, chacun pouvant être éventuellement substitué par un ou plusieurs substituants choisis parmi -OH, -NRR', -OAlkyle ; encore plus préférentiellement, L représente un radical Alkyle-, éventuellement substitué par un radical -OH, ou un radical Alkényle- ; encore plus préférentiellement, L représente un radical -Alkyle- éventuellement substitué par un radical -OH.

Selon un autre aspect préféré, les chaînes intermédiaires peuvent être représentées par la formule (C2') :

-L"- (C2')

où L" représente une chaîne -Alkyle-de 1 à 6 chaînons, éventuellement substituée par un ou plusieurs substituants choisis parmi -OH, -NRR', -OAlkyle ; encore plus préférentiellement, L représente un radical -Alkyle-, de préférence -Méthyle-.

De préférence, les chaînes de génération sont identiques.

De préférence, dans les formules (C1) et (C2) citées ci-dessus, J et K sont respectivement égaux à A, B.

De préférence, les dendrimères selon l'invention peuvent être représentés par la formule (I) suivante :

§-{{A-B-C(D)=N-N(E)-(P(=G))<}ⁿ[J-K-L-PO₃X₂]₂}ₘ (I-1)

dans laquelle :
§, A, B, C, D, E, G, N, P, J, K, L, X, m, n, < sont définis comme précédemment.

Selon un autre aspect préféré, les dendrimères selon l'invention peuvent être représentés par la formule (I-2) suivante :

§-{{A'-(C=O)-N(R)-B'-NH-}ⁿ[L"-PO₃X₂]}ₘ (I-2)

dans laquelle :
§, A', B', C, N, P, X, L", m, n sont définis comme précédemment.

Selon un autre aspect préféré, les dendrimères selon l'invention peuvent être représentés par la formule (I-3) suivante :

§-{{A"-NH-}ⁿ[L"-PO₃X_{2]}}ₘ (I-3)

dans laquelle :
§, A", N, P, X, L", m, n sont définis comme précédemment.

Selon la présente invention, {}ⁿ désigne la structure en arborescence de génération n dudit radical.

Selon la présente invention, le radical Alk, -Alkyle ou -Alkyle- représente un radical alkyle, c'est-à-dire un radical hydrocarboné et saturé, en chaîne droite ou ramifiée, de 1 à 20 atomes de carbone, de préférence de 1 à 5 atomes de carbone.

On peut notamment citer, lorsqu'ils sont linéaires, les radicaux méthyle, éthyle, propyle, butyle, pentyle, hexyle, octyle, nonyle, décyle, dodécyle, hexadécyle, et octadécyle.

On peut notamment citer, lorsqu'ils sont ramifiés ou substitués par un ou plusieurs radical alkyle, les radicaux isopropyle, tert-butyl, 2-éthylhexyle, 2-méthylbutyle, 2-méthylpentyle, 1-méthylpentyle et 3-méthylheptyle.

-Alkényle ou -Alkényle- désigne un groupe hydrocarboné aliphatique qui contient au moins une double liaison carbone-carbone et qui peut être linéaire ou ramifié ayant environ 2 à environ 15 atomes de carbone dans la chaîne. Des groupes alcényle préférés ont 2 à environ 12 atomes de carbone dans la chaîne ; et plus encore de préférence environ 2 à environ 4 atomes de carbone dans la chaîne. Ramifié signifie qu'un ou plusieurs groupes alkyle inférieurs, tels que le méthyle, l'éthyle ou le propyle, sont liés à une chaîne alkényle linéaire. Des exemples types de groupes alcényle comprennent l'éthényle, le propényle, le *n-*butényle, l'*i*-butényle, le 3-méthylbut-2-ényle, le *n*-pentényle, l'heptényle, l'octényle, le cyclohexylbutényle et le décényle.

Alkynyle ou -Alkynyle- désigne un groupe hydrocarboné aliphatique qui contient au moins une triple liaison carbone-carbone et qui peut être linéaire ou ramifié ayant 2 à environ 15 atomes de carbone dans la chaîne. Des groupes alcynyle préférés ont 2 à environ 12 atomes de carbone dans la chaîne ; et plus encore de préférence environ 2 à environ 4 atomes de carbone dans la chaîne. Ramifié signifie qu'un ou plusieurs groupes alkyle inférieurs, tels que le méthyle, l'éthyle ou le propyle, sont liés à une chaîne alcynyle linéaire. Des exemples types de groupes alcynyle comprennent l'éthynyle, le propynyle, le *n*-butynyle, le 2-butynyle, le 3-méthylbutynyle, le *n*-pentynyle, l'heptynyle, l'octynyle et le décynyle.

Parmi les atomes d'Halogène, on cite plus particulièrement les atomes de fluor, de chlore, de brome et d'iode, de préférence le fluor.

Le radical -Aryle ou -Aryle- représente un radical Aryle, c'est-à-dire un système aromatique hydrocarboné, mono ou bicyclique de 6 à 10 atomes de carbone.

Parmi les radicaux Aryle, on peut notamment citer le radical phényle ou naphtyle, plus particulièrement substitué par un moins un atome d'halogène.

Parmi les radicaux -Aralkyle (-AlkyleAryle), on peut notamment citer le radical benzyle ou phénétyle.

Le terme « Hétéroatome » désigne l'atome d'azote, d'oxygène, silicium, phosphore ou soufre.

-Hétéroaryle ou -Hétéroaryle- désigne un radical Hétéroaryle, c'est-à-dire un système aromatique comprenant un ou plusieurs hétéroatomes choisis parmi l'azote, l'oxygène ou le soufre, mono ou bicyclique, de 5 à 10 atomes de carbone. Parmi les radicaux Hétéroaryles, on pourra citer le pyrazinyle, le thiényle, l'oxazolyle, le furazanyle, le pyrrolyle, le 1,2,4-thiadiazolyle, le naphthyridinyle, le pyridazinyle, le quinoxalinyle, le phtalazinyle, l'imidazo[1,2-a]pyridine, l'imidazo[2,1-b]thiazolyle, le cinnolinyle, le triazinyle, le benzofurazanyle, l'azaindolyle, le benzimidazolyle, le benzothiényle, le thiénopyridyle, le thiénopyrimidinyle, le pyrrolopyridyle, l'imidazopyridyle, le benzoazaindole, le 1,2,4-triazinyle, le benzothiazolyle, le furanyle, l'imidazolyle, l'indolyle, le triazolyle, le tétrazolyle, l'indolizinyle, l'isoxazolyle, l'isoquinolinyle, l'isothiazolyle, l'oxadiazolyle, le pyrazinyle, le pyridazinyle, le pyrazolyle, le pyridyle, le pyrimidinyle, le purinyle, le quinazolinyle, le quinolinyle, l'isoquinolyle, le 1,3,4-thiadiazolyle, le thiazolyle, le triazinyle, l'isothiazolyle, le carbazolyle, ainsi que les groupes correspondants issus de leur fusion ou de la fusion avec le noyau phényle. Les groupes Hétéroaryle préférés comprennent le thiényle, le pyrrolyle, le quinoxalinyle, le furanyle, l'imidazolyle, l'indolyle, l'isoxazolyle, l'isothiazolyle, le pyrazinyle, le pyridazinyle, le pyrazolyle, le pyridyle, le pyrimidinyle, le quinazolinyle, le quinolinyle, le thiazolyle, le carbazolyle, le thiadiazolyle, et les groupes issus de la fusion avec un noyau phényle, et plus particulièrement le quinolynyle, le carbazolyle, le thiadiazolyle.

Selon l'invention, on entend par « dendrimère correspondant » le dendrimère de même génération possédant les mêmes noyaux, chaînes de génération, chaînes intermédiaires et des groupes terminaux distincts.

Les sels des composés selon l'invention font référence aux sels d'addition des composés de la présente invention. Ces sels peuvent être préparés *in situ* pendant l'isolement final et la purification des composés. Les sels d'addition peuvent être préparés en faisant réagir séparément le composé purifié sous sa forme acide avec une base organique ou inorganique et en isolant le sel ainsi formé. Les sels d'addition comprennent les sels aminés et métalliques. Les sels métalliques adaptés comprennent les sels de sodium, potassium, calcium, baryum, zinc, magnésium et aluminium. Les sels de sodium et de potassium sont préférés. Les sels d'addition inorganiques de base adaptés sont préparés à partir de bases métalliques qui comprennent hydrure de sodium, hydroxyde de sodium, hydroxyde de potassium, hydroxyde de calcium, hydroxyde d'aluminium, hydroxyde de lithium, hydroxyde de magnésium, hydroxyde de zinc.

Selon un autre objet, la présente invention concerne également le procédé de préparation des dendrimères cités ci-dessus.

Les composés de l'invention peuvent être préparés par application ou adaptation de toute méthode connue en soi de et/ou à la portée de l'homme du métier permettant le greffage de fonctions -PO₃X₂, notamment celles décrites par Larock dans Comprehensive Organic Transformations, VCH Pub., 1989, ou par application ou adaptation des procédés décrits dans les exemples qui suivent.

Dans les réactions décrites ci-après, il peut être nécessaire de protéger les groupes fonctionnels réactifs, par exemples les groupes hydroxy, amino, imino, thio, carboxy, lorsqu'ils sont souhaités dans le produit final, pour éviter leur participation indésirable dans les réactions. Les groupes de protection traditionnels peuvent être utilisés conformément à la pratique standard, pour des exemples voir T.W. Green et P.G.M. Wuts dans Protective Groups in Organic Chemistry, John Wiley and Sons, 1991 ; J.F.W. McOmie in Protective Groups in Organic Chemistry, Plenum Press, 1973.

Selon l'invention, le procédé de préparation d'un dendrimère selon l'invention comprenant le groupe terminal -P(=O)(OX)₂ comprend :
(i) la réaction du dendrimère correspondant présentant une fonction terminale -CHO, -CH=NR, ou -P(=G)Cl₂
   avec un composé correspondant présentant une fonctionnalité -PO₃Me₂ ;
(ii) suivie éventuellement, lorsque X représente H ou M, de l'étape consistant à transformer le dendrimère obtenu en (i) présentant une terminaison -PO₃Me₂ en le dendrimère correspondant présentant une terminaison -P(=O)(OH)₂,
(iii) suivie éventuellement, lorsque X représente M, de l'étape consistant à transformer le dendrimère obtenu en (ii) présentant une terminaison (OH)₂ en le sel du dendrimère correspondant présentant une terminaison P(=O)(OM)₂.

Selon l'invention, l'étape (i) comprend la réaction du dendrimère correspondant de même génération n présentant une fonction terminale -CHO, -CH=NR, ou -(P(=S)Cl₂
avec
un composé de formule Z-PO₃Me₂, où Z représente respectivement :
- soit -H lorsque la fonction est -CHO ou -CH=NR,
- soit la chaîne intermédiaire précédemment définie lorsque ladite fonction représente -(P(=S)Cl₂ ;

Selon une première alternative, l'étape (i) comprend l'action de HPOₛMe₂ sur le dendrimère correspondant présentant une terminaison -CHO ou -CH=NR par application ou adaptation de la méthode décrite dans J.Org.Chem. 1997, 62, 4834.

Plus précisément, cette réaction est effectuée sous agitation, en solution dans un solvant polaire, aprotique, tel que le THF, le chloroforme, le dichlorométhane, l'acétonitrile, de préférence sans solvant, en présence d'une base organique ou inorganique, de préférence une base azotée, telle que la triéthylamine, à température comprise entre -80°C et 100°C, de préférence à température ambiante.

Le composé de formule HPO₃Me₂ est disponible commercialement (Aldrich) ou peut être préparé selon des méthodes connues en soi.

Selon une seconde alternative,
l'étape (i) comprend l'action d'un composé de formule Z-PO₃Me₂, où Z représente la chaîne intermédiaire précédemment définie sur un dendrimère de départ présentant la fonction terminale -(P(=S)Cl₂.
   Cette réaction est effectuée sous agitation, en solution dans un solvant polaire, aprotique tel que le THF, le chloroforme, le dichlorométhane, l'acétonitrile, l'acétone, le DMF, de préférence le THF, en présence d'une base organique ou inorganique, de préférence de type carbonate, telle que le carbonate de césium, à température comprise entre -80°C et 100°C, de préférence à température ambiante.
(ii) suivie éventuellement, lorsque X représente H ou M, de l'étape consistant à transformer le dendrimère obtenu en (i) présentant une terminaison -PO₃Me₂ en le dendrimère correspondant présentant une terminaison -PO₃H₂,
   - par action d'halogénure de triméthylsilane, de préférence le bromure de triméthylsilane (Me₃SiBr), dans un solvant organique aprotique, polaire, tel que le chloroforme, le dichlorométhane, l'acétonitrile, de préférence l'acétonitrile. De préférence, on opère par ajout lent d'halogénure de triméthylsilane, en maintenant le mélange réactionnel à une température comprise entre -80°C et 100°C, de préférence, à environ 0°C.
   - suivie de l'action de MeOH anhydre, ajouté au mélange réactionnel ;
(iii) suivie éventuellement, lorsque X représente M, de l'étape consistant à transformer le dendrimère obtenu en (ii) présentant une terminaison -PO₃H₂ en le sel du dendrimère correspondant présentant une terminaison -PO₃M₂.

Plus précisément, selon l'invention, lorsque le dendrimère est de formule (I-1)

§-{{A-B-C(D)=N-N(E)-(P(=G))<}ⁿ[J-K-L-PO₃X₂]₂}ₘ (I-1)

dans laquelle §, A, B, C, D, E, G, N, P, J, K, L, X, m, n, < sont définis comme précédemment,
l'étape (i) comprend la réaction sur le dendrimère correspondant n de formule

   §-{{A-B-C(D)=N-N(E)-(P(=G))<}ⁿ-Y₂}ₘ (II-1)

   où Y représente :
   - soit -J-K-L', où L' représente un radical -CHO ou -CH=NR ;
   - soit -Cl ;
   d'un composé de formule Z-PO₃Me₂, où Z représente respectivement :
   - soit H- lorsque Y représente -J-K-L' ;
   - soit H-J-K-L- lorsque Y représente Cl ;
(ii) suivie éventuellement, lorsque X représente H ou M, de l'étape consistant à transformer le dendrimère de formule (III-1) obtenu en (i) dans laquelle X représente un radical Méthyle en le dendrimère correspondant de formule (I) dans laquelle X représente un atome d'hydrogène, selon le schéma réactionnel suivant : 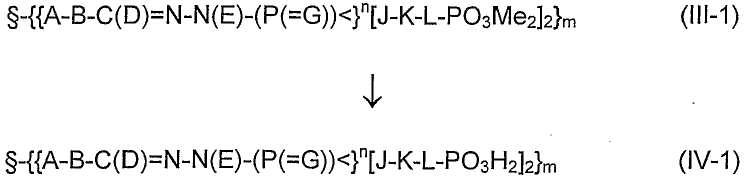 dans laquelle §, A, B, C, D, E, G, N, P, J, K, L, n, m, < sont définis comme précédemment,
(iii) suivie éventuellement, lorsque X représente M, de l'étape consistant à transformer le dendrimère de formule (IV) obtenu en (ii) en le sel correspondant.

Le produit de formule (III-1) est obtenu selon l'étape (i) par l'une ou l'autre des méthodes suivantes :

Selon une première alternative de l'étape (i), le produit de formule (III-1) est obtenu selon la réaction suivante : 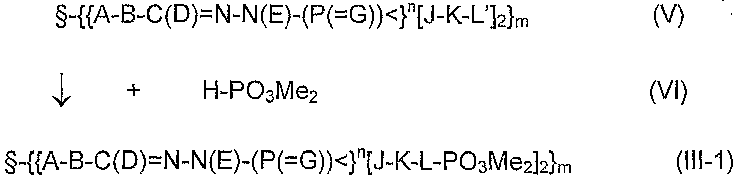 où
§, A, B, C, D, E, G, N, P, J, K, L, L', m, n, < sont définis comme précédemment.

Cette réaction peut être effectuée par application ou adaptation de la méthode décrite dans J. Org. Chem. 1997, 62, 4834.

Plus précisément, cette réaction est effectuée sous agitation, éventuellement en solution dans un solvant polaire, aprotique, tel que le THF, le dichlorométhane, le chloroforme ou l'acétonitrile, de préférence sans solvant, en présence d'une base organique ou inorganique, de préférence azotée, telle que la triéthylamine, à température comprise entre -80°C et 1000°C, de préférence à température ambiante.

Le composé de formule (VI) est disponible commercialement (Aldrich) ou peut être préparé selon des méthodes connues en soi.

Les dendrimères de formule (V-1) sont disponibles commercialement (Aldrich) ou peuvent être préparés selon des méthodes connues en soi.

Selon une seconde alternative, le composé de formule (III-1) est obtenu selon la réaction suivante : 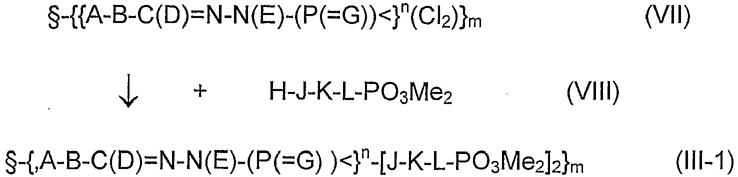 où
§, A, B, C, D, E, G, N, P, J, K, L, m, n sont définis comme précédemment.

Cette réaction est effectuée sous agitation, en solution dans un solvant polaire, aprotique, tel que le THF, le chloroforme, le dichlorométhane, l'acétonitrile, l'acétone, le DMF, de préférence le THF, en présence d'une base organique ou inorganique, de préférence de type carbonate, telle que le carbonate de césium, à température comprise entre -80°C et 100°C, de préférence à température ambiante.

Les dendrimères de formule (VII) sont disponibles commercialement (Aldrich) ou peuvent être préparés selon des méthodes connues en soi.

Les dendrimères de formule (V) et (VII) peuvent notamment être choisis parmi :

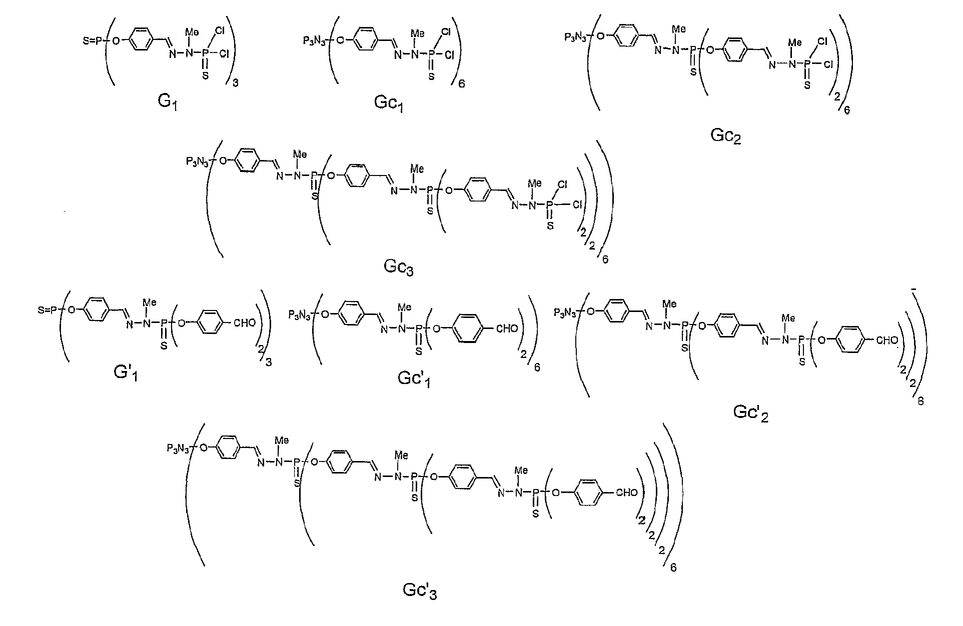

Plus précisément, lorsque les dendrimères selon l'invention sont représentés par la formule (I-2) suivante :

S-{{A'-(C=O)-N (R)-B'-NH-}ⁿ[L"-PO₃X₂]}ₘ (I-2)

dans laquelle §, A', B', C, N, P, X, L", m, n sont définis comme précédemment.

Ou la formule (I-3) suivante :

S-{{A"-NH-}ⁿ[L"-PO₃X₂]₂}ₘ (I-3)

dans laquelle §, A", N, P, X, L", m, n sont définis comme précédemment,
le procédé comprend :
l'étape (i) comprenant la réaction sur le dendrimère correspondant n de formule

   §-{{A'-(C=O)-N(R)-B'-N=R}ⁿ}ₘ (II-2)

   ou

   §-{{A"-N=R}ⁿ}ₘ (I-3)

   où R est un radical >Alkyle,
   avec un composé de formule H-PO₃Me₂ (VI).

Cette réaction peut être effectuée par application ou adaptation de la méthode décrite dans J. Org. Chem. 1997, 62, 4834.

Plus précisément, cette réaction est effectuée sous agitation, éventuellement en solution dans un solvant polaire, aprotique, tel que le THF, le chloroforme, le dichlorométhane, l'acétonitrile, de préférence sans solvant, en présence d'une base organique ou inorganique, de préférence azotée, telle que la triéthylamine, à température comprise entre -80°C et 100°C, de préférence à température ambiante.

Le composé de formule (VI) est disponible commercialement (Aldrich) ou peut être préparé selon des méthodes connues en soi.
Les dendrimères de formule

§-{{A'-(C=O)-N(R)-B'-N=R}ⁿ}ₘ (II-2)

ou

§-{{A"-N=R}ⁿ}ₘ (II-3)

peuvent être obtenus à partir des dendrimères correspondants de formule

§-{{A'-(C=O)-N(R)-B'-NH₂}ⁿ}ₘ (XVI)

ou

§-{{A"-NH₂}ⁿ}ₘ (XVII)

commerciaux, par application ou adaptation de toute réaction connue en soi, permettant de transformer le groupe terminal -NH₂ en la fonction terminale -N=R requise. De telles méthodes, à la portée de l'homme de l'art ont notamment été décrites par Larock et al (supra).

Les dendrimères de formule (XVI) et (XVII) sont disponibles commercialement et peuvent notamment être choisis parmi les dendrimères de type DAB ou PAMAM.
(ii) suivie éventuellement, lorsque X représente H ou M, de l'étape consistant à transformer le dendrimère de formule (III-2) ou (III-3) obtenu en (i) dans laquelle X représente un radical Méthyle en le dendrimère correspondant de formule (I) dans laquelle X représente un atome d'hydrogène, selon le schéma réactionnel suivant : 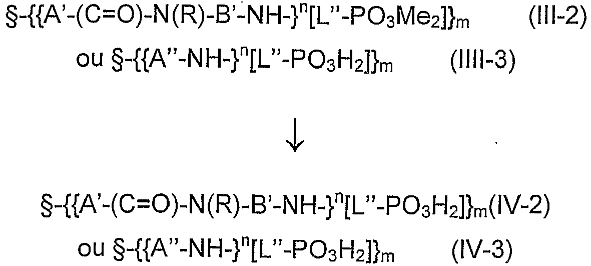
(iii) suivie éventuellement, lorsque X représente M, de l'étape consistant à transformer le dendrimère de formule (IV) obtenu en (ii) en le sel correspondant.

Dans tous les cas, la réaction (ii) est effectuée :
- par action d'halogénure de triméthylsilane, de préférence le bromure de triméthylsilane (Me₃SiBr), dans un solvant organique aprotique, polaire, tel que l'acétonitrile, le chloroforme ou le dichlorométhane, de préférence l'acétonitrile. De préférence on opère par ajout lent d'halogénure de triméthylsilane, en maintenant le mélange réactionnel à une température comprise entre -80°C et 100°C, de préférence, à environ 0°C.
- suivie de l'action de MeOH anhydre, ajouté au mélange réactionnel.

Dans l'étape (iii), les sels d'acides des composés selon l'invention peuvent être obtenus à partir des composés selon l'invention présentant une chaîne terminale dans laquelle Z représente un atome d'hydrogène, par l'application ou l'adaptation de procédés connus, par addition d'une base. De préférence, on opère en solution, sous agitation, dans un solvant convenable protique ou aprotique, apolaire, tel que les alcools, l'eau, le THF, le dichlorométhane, le chloroforme, l'acétonitrile, le DMF, l'eau, de préférence l'eau, en présence d'une base organique ou inorganique, telle que les hydroxydes, les carbonates, les bases azotées, de préférence l'hydroxyde de sodium, de lithium ou de potassium, selon le sel désiré.

Lorsqu'on utilise des dendrimères de départ présentant des groupes terminaux différents des fonctions terminales décrites plus haut pour les dendrimères de formule (II-1), (II-2) ou (II-3), le procédé selon l'invention comprend l'étape préliminaire supplémentaire permettant de transformer lesdits groupes en lesdites fonctions requises. Par exemple, dans le cas de dendrimères présentant des groupes terminaux de type acide carboxylique ou hydroxyle, il suffit d'effectuer toute réaction permettant de convertir lesdits groupes de type acide carboxylique ou hydroxyle en les fonctions de type -NH₂, -CHO, -C=NR ou -PSCl₂ correspondantes aux dendrimères de formule (II-1), (II-2) ou (II-3). De telles réactions sont connues de l'homme du métier et/ou peuvent être effectuées par application ou adaptation de celles discutées par Larock et al (*supra*).

Pour obtenir un dendrimère selon l'invention de génération 0, les réactions ci-dessus peuvent être effectuée de la même façon en opérant à partir du noyau, présentant la fonctionnalité requise. Par exemple, les réactions de génération peuvent être effectuées en opérant à partir d'un noyau PSCl₃, P₃N₃Cl₆, P₄N₄Cl₈, ou

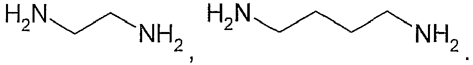

Les composés de formule (VIII) sont nouveaux et font donc également partie de la présente invention.

La présente invention concerne donc également les composés de formule (VIII) :

Z-J-K-L-PO₃Me₂ (VIII)

dans laquelle
Z représente H ou un groupe protecteur de la fonction -JH ; ces groupes protecteurs sont connus en soi et peuvent être notamment être identifiés dans Greene et al ou McOmie et al. cités ci-avant. De préférence, lorsque J représente un atome d'oxygène, Z représente le groupe TBDMS (radical tertio-butyl-diméthylsilyle).
J représente un atome d'oxygène, soufre, ou un radical -NR- ;
K représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
L représente une chaîne hydrocarbonée de 1 à 6 chaînons, linéaire ou ramifiée, chacun desdits chaînons pouvant éventuellement être choisis parmi un hétéroatome, de préférence l'azote, et/ou contenant éventuellement une ou plusieurs double ou triple liaison, chacun desdits maillons pouvant éventuellement être substitué par un ou plusieurs substituants choisi(s) parmi -OH, -NRR', -OAlkyle, -Alkyle, -Hal, -NO₂, -CN, -CF₃, -Aryle, -Aralkyle.

R, R', identiques ou différents, représentent indépendamment l'un de l'autre un atome d'hydrogène ou un radical -Alkyle, -Aryle, -Aralkyle.

De préférence, dans la formule (VIII) ci-dessus, J représente un atome d'oxygène.

De préférence, dans la formule (VIII) ci-dessus, K représente un noyau phényle, éventuellement substitué ; encore plus préférentiellement, K représente un noyau phényle non substitué.

De préférence, dans la formule (VIII) ci-dessus, L représente un radical -Alkyle-, éventuellement substitué par un radical -OH, ou un radical Alkényle- ; encore plus préférentiellement, L représente un radical -Alkyle-.

Les composés de formule (VIII) peuvent être obtenus de la façon suivante :

Z-J-K-L-Hal (IX) → Z-J-K-L- PO₃Me₂ (VIII)

où Z, J, K, L sont définis comme précédemment, Hal représente un atome d'halogène, de préférence le brome.

Dans le cas où, dans la formule (VIII), Z=H, le produit de formule (VIII) est obtenu à partir du produit de formule (VIII) où Z est un groupe protecteur, par application ou adaptation de toute méthode connue de déprotection du groupe protecteur Z, notamment celles décrites dans Greene et al. ou McOmie et al. (supra). Notamment, dans le cas où J=O et Z=TBDMS, on opère par action de fluorure de tétrabutylammonium, de préférence 2 équivalents, sous agitation, en solution dans un solvant polaire, aprotique, tel que le THF, le chloroforme, le dichlorométhane, l'acétonitrile, le DMF, de préférence le THF, à une température comprise entre -80°C et 100°C, de préférence à température ambiante.

Le produit de formule (VIII) où Z est un groupe protecteur est obtenu à partir du produit de formule (IX) par application ou adaptation de la réaction d'Arbuzow décrite notamment dans B.A. Arbuzow, Pure appl. Chem. 1964, 9, 307*,* ou toute réaction équivalente. Notamment, on met à réagir le produit de formule (IX) en présence de triméthylephosphite de formule

P(OMe)₃ (X)

sous agitation, en solution dans un solvant polaire, aprotique, tel que le THF, le chloroforme, le dichlorométhane, l'acétonitrile, de préférence sans solvant, à une température comprise entre -80°C et 150°C, de préférence à environ 80°C.

Le produit de formule (IX) peut être obtenu par application ou adaptation de la méthode décrite par Olszewski et al dans J. Org. Chem. 1994, 59, 4285-4296.

Notamment, on peut opérer de la façon suivante :

H-J-K-L"-CHO (XI) → Z-J-K-L"-CHO (XII) → Z-J-K-L-OH (XIII) → Z-J-K-L-COCF₃ (XIV) → Z-J-K-L-Hal (IX)

où Z, J, K, L, Hal sont tels que définis plus haut et L" représente un radical correspondant à L où un atome d'hydrogène et de carbone ont été formellement éliminés.

Le produit de formule (IX) est obtenu à partir du produit de formule (XIV) par application ou adaptation de toute réaction connue de substitution du groupe trifluoroacétate par un atome d'halogène, le brome notamment, par exemple par action de LiBr sous agitation, en solution dans un solvant polaire, aprotique, tel que le THF, le chloroforme, le dichlorométhane, l'acétonitrile, le DMF, de préférence le THF, à reflux, pendant une durée nécessaire à l'obtention d'un rendement acceptable de la réaction, par exemple entre 5 et 20 heures.

Le produit de formule (XIV) est obtenu à partir du produit de formule (XIII) par application ou adaptation de toute réaction connue de substitution de la fonction hydroxy par un radical trifluoroacétate, notamment par action de l'anhydride trifluoroacétique (CF₃CO)₂O sous agitation, en solution dans un solvant polaire, aprotique, tel que le THF, le chloroforme, le dichlorométhane, l'acétonitrile, le DMF, de préférence le THF, à reflux, pendant une durée nécessaire à l'obtention d'un rendement acceptable de la réaction, par exemple entre 5 minutes et 5 heures.

Le produit de formule (XIII) est obtenu à partir du produit de formule (XII) par application ou adaptation de toute réaction connue de réduction de la fonction aldéhyde en fonction hydroxy, notamment par action d'un agent réducteur tel que NaBH₄ ou tout agent équivalent, en solution dans un solvant polaire, protique ou aprotique, tel que l'éther, le THF, les alcools, l'eau, de préférence le mélange THF/EtOH (5/1), à reflux, pendant une durée nécessaire à l'obtention d'un rendement acceptable de la réaction, par exemple entre 1 heure et 10 jours.

Le produit de formule (XII) est obtenu à partir du produit de formule (XI) par application ou adaptation de toute réaction connue de protection de la fonction -JH par un groupe protecteur Z ou tout autre groupe protecteur convenable, par application ou adaptation des méthodes décrites par Green et al. ou Wuts et al. cités ci-avant. Dans les cas de la protection par TBDMS, on opère notamment par action de CI-TBDMS (XV) sous agitation, en solution dans un solvant polaire, aprotique, tel que le THF, le chloroforme, le dichlorométhane, l'acétonitrile, le DMF, de préférence le dichlorométhane, en présence d'une base telle que la triéthylamine (2 équivalents), à température comprise entre -80°C et 100°C, de préférence à température ambiante.

Le produit de formule (XI) est commercial et peut notamment être obtenu auprès de Aldrich.

Dans la description du procédé ci-dessus, deux groupes sont dits « correspondants » lorsque ils sont respectivement inclus dans un produit de départ et d'arrivée, et leur structure est identique et peut se déduire l'une de l'autre.

Eventuellement, ledit procédé peut également comprendre l'étape consistant à isoler le produit obtenu ou le produit final intermédiairement formé à l'issue des étapes (i), (ii) ou (iii).

Le composé ainsi préparé peut être récupéré à partir du mélange de la réaction par les moyens traditionnels. Par exemple, les composés peuvent être récupérés en distillant le solvant du mélange de la réaction ou si nécessaire après distillation du solvant du mélange de la solution, en versant le reste dans de l'eau suivi par une extraction avec un solvant organique immiscible dans l'eau, et en distillant le solvant de l'extrait. En outre, le produit peut, si on le souhaite, être encore purifié par diverses techniques, telles que la recristallisation, la reprécipitation ou les diverses techniques de chromatographie, notamment la chromatographie sur colonne ou la chromatographie en couche mince préparative.

Il sera apprécié que les composés utiles selon la présente invention peuvent contenir des centres asymétriques. Ces centres asymétriques peuvent être indépendamment en configuration R ou S. Il apparaîtra à l'homme du métier que certains composés utiles selon l'invention peuvent également présenter une isomérie géométrique. On doit comprendre que la présente invention comprend des isomères géométriques individuels et des stéréoisomères et des mélanges de ceux-ci, incluant des mélanges racémiques, de composés de formule (I) ci-dessus. Ces isomères peuvent être séparés de leurs mélanges, par l'application ou l'adaptation de procédés connus, par exemple des techniques de chromatographie ou des techniques de recristallisation, ou ils sont préparés séparément à partir des isomères appropriés de leurs intermédiaires.

Aux fins de ce texte, il est entendu que les formes tautomériques sont comprises dans la citation d'un groupe donné, par exemple thio/mercapto ou oxo/hydroxy.

Les composés utiles selon la présente invention peuvent être facilement préparés, ou formés pendant le processus de l'invention, sous forme de solvates (par exemple hydrates). Les hydrates des composés utiles selon la présente invention peuvent être facilement préparés par la recristallisation d'un mélange de solvant aqueux/organique, en utilisant des solvants organiques tels que dioxan, tétrahydrofuranne ou méthanol.

Les produits de base ou les intermédiaires peuvent être préparés par l'application ou l'adaptation de procédés connus, par exemple des procédés tels que décrits dans les Exemples de Référence ou leurs équivalents chimiques évidents.

Les inventeurs ont découvert que les dendrimères selon l'invention présentent des propriétés particulièrement avantageuses de traitement de surface, notamment les surfaces métalliques ou à base de silicium ou à base d'oxyde, tels que la silice, les oxydes de titane, zirconium, etc.... Ils peuvent notamment être utilisés à titre d'additif dans toute composition destinée au contact ou au traitement desdites surfaces, par exemple à titre d'agent anti-corrosion, agent de lubrification, agent anti-tartre ou agent retardateur de feu, notamment pour polymères plastiques.

### EXEMPLES

### GÉNÉRALITÉS

Les réactions ont été réalisées sous atmosphère d'argon sec (argon U, Air Liquide). Les solvants suivants ont été séchés et distillés sous argon immédiatement avant usage selon les techniques décrites par Perrin et al, Purification of Laboratory Chemicals, Third Edition; Press, P., Ed.: Oxford, 1988 : tétrahydrofuranne, dichlorométhane, acétonitrile, pentane, toluène, éther diéthylique, chloroforme, triéthylamine, pyridine.

Les chromatographies sur couche mince ont été réalisées sur des plaques d'aluminium enduites de silice de type Merck Kieselgel 60F₂₅₄.

Les spectres de RMN ont été enregistrés sur des appareils Brüker (AC200, AM250, DPX 300). Les déplacements chimiques sont exprimés en parties par million (ppm) par rapport à l'acide phosphorique à 85 % dans l'eau pour la RMN ³¹P et par rapport au tétraméthylsilane pour la RMN ¹H et ³C. Les abréviations suivantes ont été utilisées pour exprimer la multiplicité des signaux : s (singulet), d (doublet), dl (doublet large), dd (doublet dédoublé), syst.AB (système AB), t (triplet), td (triplet dédoublé), q (quadruplet), hept (heptuplet), m (multiplet non résolu).

La spectroscopie vibrationnelle dans l'infrarouge a été réalisée sur un spectromètre Perkin Elmer FT 1725x. La spectroscopie UV-visible a été réalisée sur un appareil HP 4852A. Les mesures thermogravimétriques ont été réalisées sur un appareil Netzch DSC 204 ou Setaram TGA 92-16.18.

### Numérotation utilisée pour l'attribution en RMN :

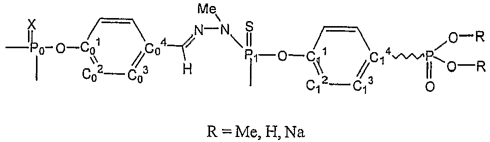

### Exemple de numérotation pour un dendrimère de première génération

### Structures des différents dendrimères utilisés comme produit de départ

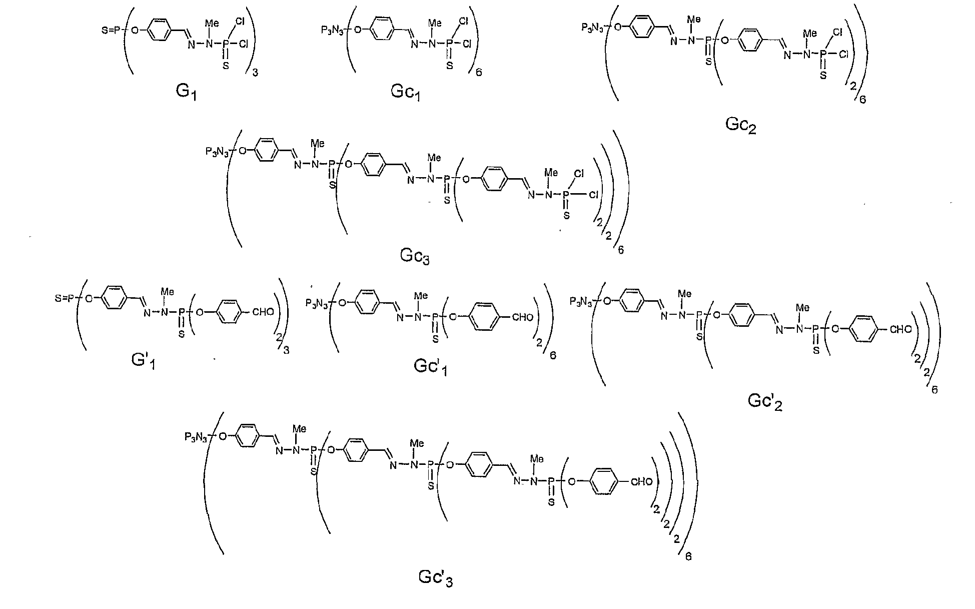

### Exemple 1 : Synthèse du dendrimère de première génération (coeur P=S) à extrémités α-hydroxy-diméthylphosphonate

Le dendrimère G'₁ (0,14 mmol, 200 mg) est mis en solution dans 0,2 ml de THF avec de la triéthylamine distillée (0,126 mmol, 4,5 µL), et du diméthylphosphite (1,26 mmol, 115 µL). On laisse le mélange pendant 12 heures avec une agitation magnétique. La pâte obtenue est ensuite lavée avec un mélange THF/Et₂O : 1/1, pour donner une poudre blanche. Le produit final est isolé avec un rendement final de 72%. 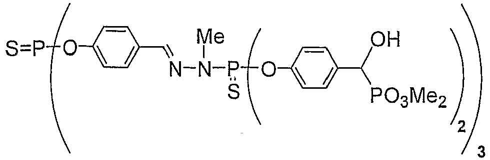 RMN ³¹P-{¹H} (DMSO d6) : δ = 27,10 (s, P(O)(O-CH₃)₂), 56,10 (s, P₀), 65,91 (s, P₁) ppm.
RMN ¹H (DMSO d6) : δ = 3,34 (d, ³*J*_{HP} = 9,8 Hz, 9H, CH₃-N-P₁), 3,52 (d, 18H, ³*J*_{HP} = 10,3 Hz, P(O)-O-CH₃), 3,57 (d, 18H, ³*J*_{HP}= 11,6 Hz, P(O)-O-CH₃), 5,01 (dd, ³*J*_{HH} = 4,5 Hz, ²*J*_{HP} = 13,0 Hz, 6H, CH-P(O)), 6,33 (dd, ³*J*_{HH} = 5,6 Hz, ³*J*_{HP} = 15,7 Hz, 6H, OH), 7,18-7,93 (m, 39H, Hₐᵣₒₘ, CH=N) ppm.
RMN ¹³C-{¹H} (DMSO d6) : δ = 33,9 (d, ²*J*_{CP} = 12,1 Hz, CH₃-N-P₁), 53,7 (d, ²*J*_{CP} = 6,8 Hz, CH₃-O-P(O)), 54,2 (d, ²*J*_{CP} = 7,0 Hz, CH₃-O-P(O)), 70,0 (d, ¹*J*_{CP} = 162,8 Hz, C-OH), 121,3 (s large, C₁²), 122,4 (d, ³*J*_{CP} = 3,8 Hz, C₀²), 129, 4 (s, C₀³), 129,8 (d, ³*J*_{CP} = 5,6 Hz, C₁³), 133,6 (s, C₀⁴), 136,4 (s, C₁⁴) 141,4 (d, ³*J*_{CP} = 14,5 Hz, CH=N), 150,3 (dd, ⁵*J*_{CP} = 3,4 Hz, ²*J*_{CP} = 6,6 Hz, C₁¹), 151,4 (d, ²*J*_{CP} = 8,0 Hz, C₀¹) ppm.

### Exemple 2 : Synthèse du dendrimère de première génération (coeur P₃N₃) à extrémités α-hydroxy-diméthylphosphonate

On met 1 g de G_{C}'₁ (0,35 mmol) en solution dans 1 ml de THF puis on additionne la triéthylamine distillée (10 µl soit 0,84.10⁻³ mol), et le diméthylphosphite (382 µL soit 4,2.10⁻³ mol) (1 équiv par -CHO). On laisse le mélange pendant 12 heures sous agitation. La pâte obtenue est ensuite lavée avec un mélange THF/Et₂O : 1/1, pour donner une poudre blanche. Le produit final est isolé avec un rendement final de 72%. 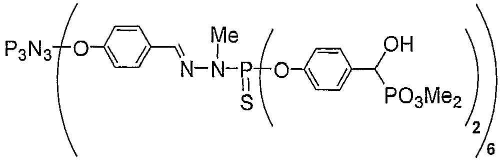 RMN ³¹P-{¹H} (DMSO d6) : δ = 11,46 (s, P₀), 27,10 (s, P(O)(O-CH₃)₂), 66,07 (s, P₁) ppm.
RMN ¹H (DMSO d6) : δ= 3,35 (d, ³*J*_{HP} = 10,5 Hz, 18H, CH₃-N-P₁), 3,54 (d, ³*J*_{HP} = 10,3 Hz, 36H, P(O)-O-CH₃), 3,59 (d, ³*J*_{HP} = 10,4 Hz, 36H, P(O)-O-CH₃), 5,01 (dd, ³*J*_{HH} = 5,2 Hz, ²*J*_{HP} = 13,5 Hz, 12H, CH-P(O)), 6,41 (dd, ³*J*_{HH} = 5,6 Hz, ³*J*_{HP} = 15,5 Hz, 12H, OH), 7,18-7,93 (m, 78H, Hₐᵣₒₘ, CH=N) ppm.
RMN ¹³C-{¹H} (DMSO d6) : δ = 32,8 (d, ²*J*_{CP}= 11,9 Hz, CH₃-N-P₁), 52,7 (d, ²*J*_{CP}= 6,9 Hz, CH₃-O-P(O)), 53,2 (d, ²*j*_{Cp} = 6,9 Hz, CH₃-O-P(O)), 68,2 (d, ¹*J*_{CP} = 162,3 Hz, C-OH), 120,4 (s large, C₁²), 120,8 (s, C₀²), 128,2 (s, C₀³), 128,7 (d, ³*J*_{CP} = 5,7 Hz, C₁³) 132,0 (s, C₀⁴), 135,5 (s, C₁⁴), 140,2 (d, ³*J*_{CP} = 13,8 Hz, CH=N), 149,4 (d, ²*J*_{CP} = 6,3 Hz, C₁¹), 150,5 (s, C₀¹) ppm.
IR: Absence de ∪(CHO) à 1670 cm⁻¹; u(OH) à 3271 cm⁻¹.

### Exemple 3 : Synthèse du dendrimère de deuxième génération à extrémités α-hydroxy-diméthylphosphonate

Le dendrimère Gc'₂ (0,146 mmol, 1g) est mis en solution dans 1 ml de THF avec de la triéthylamine distillée (1,3 mmol, 15 µL), et du diméthylphosphite (3,5 mmol, 319 µL). On laisse le mélange pendant 12 heures avec une agitation magnétique. La pâte obtenue est ensuite lavée avec un mélange THF/Et₂O : 1/1, pour donner une poudre blanche. Le produit final est isolé avec un rendement final de 80%. 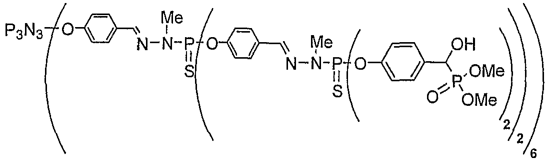 RMN ³¹P-{¹H} (DMSO d6) : δ = 11,7 (s, P₀), 27,10 (s, P(O)(O-CH₃)₂), 66,1 (s large, P₁,₂) ppm.
RMN ¹H (DMSO d6) : δ = 3,29 (d large, ³*J*_{HP} = 9,2 Hz, 54H, CH₃-N-P₁, CH₃-N-P₂), 3,49 (d, ²*J*_{CP} = 10,9 Hz, 72H, P(O)-O-CH₃), 3,55 (d, ²*J*_{CP} = 10,6 Hz, 72H, P(O)-O-CH₃), 5,00 (dd, ³*J*_{HH} = 5,4 Hz , ²*J*_{HP} = 15,7 Hz, 24H, CH-P(O)), 6,30 (dd, ³*J*_{HH} = 5,4 Hz , ²*J*_{HP} = 15,7 Hz, 24H, OH), 7,0-8,0 (m, 186H, Hₐᵣₒₘ, CH=N) ppm.
RMN ¹³C-{1H} (DMSO d6) : δ = 32,8 (d large, ²*J*_{CP} = 11,3 Hz, CH₃-N-P_{1,2}), 52,7 (d, ²*J*_{CP} = 6,2 Hz, CH₃-O-P(O)), 53,2 (d, ²*J*_{CP} = 6,3 Hz, CH₃-O-P(O)), 68,2 (d, ¹*J*_{CP} = 163,0 Hz, C-OH), 120,4 (s large, C₂²), 120,8 (s large, C₀²), 121,4 (s, C₁²), 128,2 (s, C₀³), 128,2 (s, C₁³), 128,7 (d, ³*J*_{CP} = 3,7 Hz, C₂³), 132,1 (s, C₀⁴), 132,1 (s, C₁⁴), 135,4 (s, C₂⁴), 140,2 (s large, CH=N-N(Me)-P_{1,2}), 149,4 (d, ²*J*_{CP} = 3,8 Hz, C₂¹), 150,4 (s, C₀¹) 150,7 (d, ²*J*_{CP} = 6,4 Hz, C₁¹) ppm.
IR: Absence de u(CHO) à 1670 cm⁻¹; u(OH) à 3271 cm⁻¹.

### Exemple 4 : Synthèse du dendrimère de troisième génération à extrémités α-hydroxy-diméthylphosphonate

Le dendrimère Gc'₃ (1,35.10⁻² mmol, 0,2 g) est mis en solution dans 0,2 ml de THF avec de la triéthylamine distillée (0,8 mmol, 10 µL), et du diméthylphosphite (0,648 mmol, 59 µL). On laisse le mélange pendant 12 heures avec une agitation magnétique. La pâte obtenue est ensuite lavée avec un mélange THF/Et₂O : 1/1, pour donner une poudre blanche. Le produit final est isolé avec un rendement final de 85%. 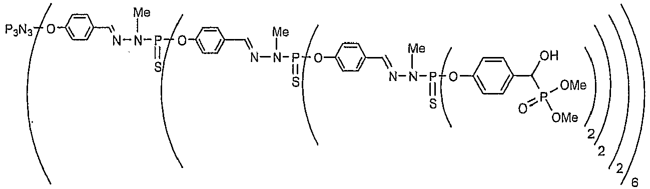 RMN ³¹P-{¹H} (DMSO d6) : δ = 11,7 (s, P₀), 28,6 (s, P(O)(O-CH₃)₂), 66,4 (s large, P_{1,2,3}) ppm.
RMN ¹H (DMSO d6) : δ = 3,40 (d large, ³*J*_{HP} = 10,7 Hz, 126H, CH₃-N-P₁, CH₃-N-P₂, CH₃-N-P₃), 3,60 (d, ²*J*_{CP} = 13,15 Hz, 144H, P(O)-O-CH₃), 3,65 (d, ²*J*_{CP} = 13,16 Hz, 144H, P(O)-O-CH₃), 5,10 (dd, ³*J*_{HH} = 4,3 Hz, ²*J*_{HP} = 15,3 Hz, 48H, CH-P(O)), 6,4 (dd, ³*J*_{HH} = 4,3 Hz, ²*J*_{HP} = 15,3 Hz, 48H, OH), 7,0-8,1 (m, 402H, Hₐᵣₒₘ, CH=N) ppm.
RMN ¹³C-{¹H} (DMSO d6) : δ = 32,8 (s large, CH₃-N-P_{1,2,3}), 52,7 (d, ²*J*_{CP} = 6,3 Hz, CH₃-O-P(O)), 53,2 (d, ²*J*_{CP} = 7,4 Hz, CH₃-O-P(O)), 68,1 (d, ¹*J*_{CP} = 162,8 Hz, C-OH), 119,5 (s, C₁²), 120,4 (s large, C₃², C₀²), 121,4 (s, C₂²), 128,3 (s large, C₀³, C₁³, C₂³), 128,6 (d, ³*J*_{CP} = 4,2 Hz, C₃³), 132,1 (s, C₀⁴, C₁⁴, C₂⁴), 135,5 (s, C₃⁴), 140,2 (s large, CH=N-N(Me)-P_{1,2,3}), 149,4 (s, d, ²*J*_{CP} = 8,3 Hz, C₃¹), 150,6 (s large, C₀¹, C₁¹, C₂¹) ppm.
IR: Absence de u(CHO) à 1670 cm⁻¹; u(OH) à 3271 cm⁻¹.

### Exemple 5 : Synthèse du dendrimère de première génération à extrémités acide α-hydroxy-phosphonique

Le dendrimère de première génération (4,78.10⁻² mmol, 200 mg) à extrémités α-hydroxy-diméthylphosphonate est mis en suspension dans l'acétonitrile (4 mL) ainsi que de la triéthylamine (0,575 mmol, 20,5 µL) à 0°C. Puis le bromure de triméthylsilane (1,72 mmol, 229 µL) est additionné lentement à 0°C, l'ensemble revient lentement à température ambiante pendant 6 heures. Puis on ajoute du méthanol anhydre (1 mL). Après 2 heures d'agitation le mélange réactionnel est séché sous pression réduite. Ensuite la poudre est mise en suspension dans un minimum d'eau pendant 30 minutes avec une forte agitation. Après filtration, le produit est séché puis lavé abondamment à l'éther. De préférence, pour obtenir un dendrimère soluble, le dendrimère final ne doit pas être totalement désolvaté. Le produit final est isolé avec un rendement final de 51 %. 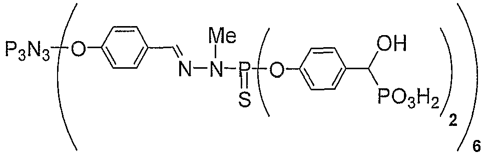 RMN ³¹P-{¹H} (DMSO d6) : δ = 11,40 (s, P₀), 22,0 (m, P(O)(OH)₂), 66,05 (s, P₁) ppm.
RMN ¹H (DMSO d6) : δ = 3,29 (d, ³*J*_{HP} = 10,5 Hz, 18H, CH₃-N-P₁), 4,67 (d, ³*J*_{HP} = 13,9 Hz, 12H, -CH-OH), 4,7-5,7 (m, 36H, -OH), 7,0-8,0 (m, 78H, Hₐᵣₒₘ, CH=N) ppm.
RMN ¹³C-{¹H} (DMSO d6) : δ = 32,9 (d, ²*J*_{CP} = 15,7 Hz, CH₃-N-P₁), 69,5 (d, ¹*J*_{CP} = 163,5 Hz, C-OH), 120,0 (s large, C₁²), 120,7 (s, C₀²), 128,2 (s, C₀³), 128,6 (s, C₁³), 132,0 (s, C₀⁴), 137,1 (s, C₁⁴), 140,2 (s large, CH=N), 148,8 (s, C₁¹), 150,4 (s, C₀¹) ppm.
IR: Absence de u(CHO) à 1670 cm⁻¹; u(OH) à 3271 cm⁻¹.

### Exemple 6 : Synthèse du dendrimère de deuxième génération à extrémités acide α-hydroxy-phosphonique

Le dendrimère de deuxième génération (3,16.10⁻² mmol, 300 mg) à extrémités α-hydroxy-diméthylphosphonate est mis en suspension dans l'acétonitrile (1,5 mL) ainsi que de la triéthylamine (0,86 mmol, 30 µL) à 0°C. Puis le bromure de triméthylsilane (2,3 mmol, 304 µL) est additionné lentement à 0°C, l'ensemble revient lentement à température ambiante pendant 6 heures. Puis on ajoute du méthanol anhydre (1 mL). Après 2 heures d'agitation le mélange réactionnel est séché sous pression réduite. Ensuite la poudre est mise en suspension dans un minimum d'eau pendant 30 minutes avec une forte agitation. Après filtration, le produit est séché puis lavé abondamment à l'éther. De préférence, si un produit soluble est désiré, le dendrimère final ne doit pas être totalement désolvaté. Le produit final est isolé avec un rendement final de 62%. 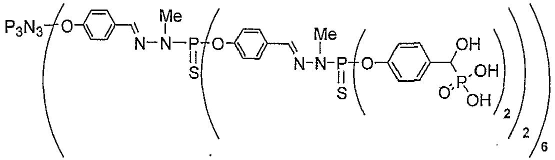 RMN ³¹P-{¹H} (DMSO d6) : δ = 11,9 (s, P₀), 21,5 (m, P(O)(OH)₂), 66,00 (s large, P_{1,2}) ppm.
RMN ¹H (DMSO d6) : δ = 3,06 (s large, 54H, CH₃-N-P_{1,2}), 4,66 (d, ³*J*_{HP} = 14,0 Hz, 24H, -CH-OH), 3,7-5,2 (m, 72H, -OH), 6,7-8,0 (m, 186H, Hₐᵣₒₘ, CH=N) ppm.
RMN ¹³C-{¹H} (DMSO d6) : δ = 33,6 (s large, CH₃-N-P_{1,2}), 70,2 (d, ¹*J*_{CP} = 158,5 Hz, C-OH), 121,0 (s large, C₂², C₀²), 122,0 (s, C₁²), 129,5 (s large, C₀³, C₁³, C₂³), 132,8 (s, C₀⁴, C₁⁴), 137,4 (s, C₂⁴), 141,0 (s large, CH=N), 149,8 (s large, C₂¹), 151,2 (s large, C₀¹, C₁¹) ppm.
IR: Absence de u(CHO) à 1670 cm⁻¹; u(OH) à 3271 cm⁻¹.

Les dérivés à terminaisons acide phosphonique peuvent être obtenus par application ou adaptation de cette méthode à partir des composés des exemples 1 à 5 et 8 à 10 présentant un groupe diméthyle phosphonate. Cette réaction ne fonctionne pas à partri du composé présentant un groupe diisopropyle phosphonate de l'exemple 7.

### Exemple 7 : Synthèse du dendrimère de première génération à terminaisons vinyl-diisopropyl-phosphonates

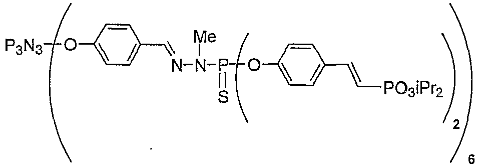

Le tétraisopropyl-méthylène-gem-diphosphonate (3 mmol) ainsi que de l'hydrure de sodium (3 mmol, 75 mg) sont mis en solution dans 2 mL de THF distillé. Cette solution est laissée sous une forte agitation pendant 2 heures à température ambiante. Une fois le dégagement d'hydrogène fini, elle est additionnée lentement sur le dendrimère Gc'₁ (0,17 mmol, 500 mg) qui a été préalablement mis en solution dans 3 mL de THF distillé. L'addition est effectuée à 0°C puis on laisse le mélange revenir à température ambiante pendant une nuit. Le solide blanc est alors lavé avec un mélange pentane / éther 1/1 de manière à retirer l'excès de tétraisopropyl-méthylène-gem-diphosphonate. Ensuite le dendrimère est mis en suspension dans le minimum d'eau, la solution trouble obtenue est centrifugée. Une poudre blanche est récupérée après centrifugation mais il peut parfois être nécessaire de répéter une deuxième fois l'opération (centrifugation) toujours avec le minimum d'eau. Le produit final est isolé avec un rendement final de 55%.
RMN ³¹P-{¹H} (CDCl₃) : δ = 11,66 (s, P₀); 65,73 (s, P₁); 20,31 (s, P=O) ppm.
RMN ¹H (CDCl₃) : δ = 1,26 (d, ³*J*_{HH} = 6,2 Hz, 72H, CH₃-CH); 1,32 (d, ³*J*_{HH} = 6,2 Hz, 72H CH₃-CH); 3,27 (d, ³*J*_{HP} = 10,4 Hz, 18H, N-Me); 4,66 (hept, ³*J*_{HH} = 5,9 Hz, 24H, O-CH-(CH₃)₂); 6,14 (dd, ³*J*_{HH} trans = ²*J*_{HP(O)} = 17,1 Hz, 12H, -CH=CH-P(O)); 6,9-7,7 (m, 90H, CHₐᵣₒₘ, CH=N, -CH=CH-P(O)) ppm.
RMN ¹³C-{¹H} (CDCl₃) : δ = 24,0 (d, ³*J*_{CP} = 5,0 Hz, CH₃-CH); 32,9 (d, ²*J*_{CP} = 12 Hz, CH₃-N-P₁); 70,5 (d, ²*J*_{CP} = 5,0 Hz, -O-CH-CH₃); 116,1 (d, ¹*J*_{CP} = 192,52 Hz, - CH=CH-P(O)(OiPr)₂); 121,4 (s large, C₀²); 121,8 (d, ³*J*_{CP} = 4,9 Hz, C₁²); 128,3 (s, C₀³); 129,0 (s, C₁³); 132,2 (d, ³*J*_{CP} = 18,7 Hz, C₁⁴); 132,7 (s, C₀⁴); 139,0 (d, ³*J*_{CP} = 14,46 Hz, CH=N); 146,3 (d, ²*J*_{CP} = 6,3 Hz, -CH=CH-P(O)(OiPr)₂); 151,3 (s large, C₀¹); 151,6 (d, ²*J*_{CP} = 5,7 Hz, C₁¹); ppm.

### Exemple 8 : Synthèse du dendrimère de première génération à terminaisons vinyl-diméthyl-phosphonates

Le tétraméthyl-méthylène-gem-diphosphonate (11,7 mmol, 2,7 g) ainsi que de l'hydrure de sodium (11,7 mmol, 281 mg) sont mis en solution dans 10 mL de THF distillé. Cette solution est laissée sous une forte agitation pendant 2 heures à température ambiante. Une fois le dégagement d'hydrogène fini, elle est additionnée lentement sur le dendrimère Gc'₂ (0,7 mmol, 1 g) qui a été préalablement mis en solution dans 5 mL de THF distillé. L'addition est effectuée à 0°C puis on laisse le mélange revenir à température ambiante pendant une nuit. Le solide blanc est alors lavé avec un mélange pentane / éther 1/1 de manière à retirer l'excès de tétraméthyl-méthylène-gem-diphosphonate. Ensuite le dendrimère est mis en suspension dans le minimum d'eau, la solution trouble obtenue est centrifugée. Une poudre blanche est récupérée après centrifugation mais il peut parfois être nécessaire de répéter une deuxième fois l'opération (centrifugation) toujours avec le minimum d'eau. Le produit final est isolé avec un rendement final de 63%. 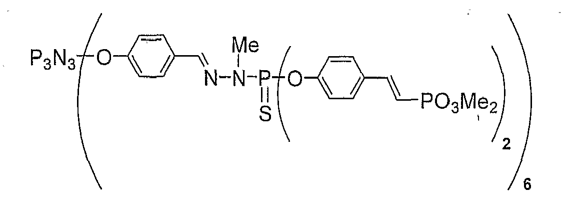 RMN ³¹P-{¹H} (CDCl₃) : δ = 11,7 (s, P₀); 65,5 (s, P₁); 25,43 (s, P=O) ppm.
RMN ¹H (CDCl₃) : δ = 3,27 (d, ³*J*_{HP} = 9,5 Hz, 18H, N-Me); 3,72 (d, ³*J*_{HP} = 10,6 Hz, 72H, O-CH₃); 6,08 (dd, ³*J*_{HH *trans*} = ²*J*_{HP(O)} = 16,9 Hz, 12H, -CH=CH-P(O)); 6,9-7,8 (m, 90H, CHₐᵣₒₘ, CH=N, -CH=CH-P(O)) ppm.
RMN ¹³C-{¹H} (CDCl₃) : δ = 32,9 (d, ²*J*_{CP} = 12,13 Hz, CH₃-N-P₁); 52,4 (d, ²*J*_{CP} = 5,6 Hz, -O-CH₃); 112,7 (d, ¹*J*_{CP} = 191,64 Hz, -CH=CH-P(O)(OMe)₂); 121,3 (s large, C₀²); 121,7 (d, ³*J*_{CP} = 3,2 Hz, C₁²); 128,2 (s, C₀³); 129,1 (s, C₁³); 131,9 (s, C₀⁴); 132,1 (d, ³*J*_{CP} = 16,9 Hz, C₁⁴); 139,0 (d, ³*J*_{CP} = 13,4 Hz, CH=N); 148,03 (d, ²*J*_{CP} = 6,8 Hz, -CH=CH-P(O)(OMe)₂); 151,2 (s large, C₀¹); 151,8 (d, ²*J*_{CP} = 6,3 Hz, C₁¹) ppm.

### Exemple 9 : Synthèse du dendrimère de seconde génération à terminaisons vinyl-diméthyl-phosphonates

Le tétraméthyl-méthylène-gem-diphosphonate (0,77 mmol, 0,18 g) ainsi que de l'hydrure de sodium (0,78 mmol, 19 mg) sont mis en solution dans 4 mL de THF distillé, cette solution est laissée sous une forte agitation pendant 2 heures à température ambiante. Une fois le dégagement d'hydrogène fini, elle est additionnée lentement sur le dendrimère Gc'₂ (2,9.10⁻² mmol, 0,2 mg) qui a été préalablement mis en solution dans 2 mL de THF distillé. L'addition est effectuée à 0°C puis on laisse le mélange revenir à température ambiante pendant une nuit. Le solide blanc est alors lavé avec un mélange pentane / éther 1/1 de manière à retirer l'excès de tétraméthyl-méthylène-gem-diphosphonate. Ensuite, le dendrimère est mis en suspension dans le minimum d'eau, la solution trouble obtenue est centrifugée. Une poudre blanche est récupérée après centrifugation mais il peut parfois être nécessaire de répéter une deuxième fois l'opération (centrifugation) toujours avec le minimum d'eau. Le produit final est isolé avec un rendement final de 68%. 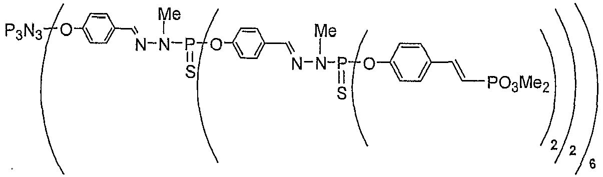 RMN ³¹P-{¹H} (CDCl₃) : δ = 11,8 (s, P₀); 65,4 (s, P₂); 65,9 (s, P₁); 25,4 (s, P=O) ppm.
RMN ¹H (CDCl₃) : δ = 3,26 (d large, ³*J*_{HP} = 10,2 Hz, 54H, N-Me); 3,66 (d, ³*J*_{HP} = 10,4 Hz, 144H, O-CH₃); 6,06 (dd, ³*J*_{HH} *ₜᵣₐₙₛ* = ²*J*_{HP(O)} = 16,9 Hz, 24H, -CH=CH-P(O)); 6,9-7,8 (m, 210H, CHₐᵣₒₘ, CH=N, -CH=CH-P(O)) ppm.
RMN ¹³C-{¹H} (CDCl₃) : δ = 33,0 (d, ²*J*_{CP} = 12,5 Hz, CH₃-N-P_{1,2}); 52,5 (d, ²*J*_{CP} = 5,3 Hz, -O-CH₃); 112,6 (d, ¹*J*_{CP} = 192,08 Hz, -CH=CH-P(O)(OMe)₂); 121,4 (s large, C₀²); 121,9 (s large, C₁², C₂²); 128,4 (s large, C₀³, C₁³); 129,2 (s, C₂³); 132,0 (s, C₁⁴); 132,4 (s large, C₀⁴, C₂⁴); 139,2 (d, ³*J*_{CP} = 13,6 Hz, CH=N); 148,1 (d, ²*J*_{CP} = 5,4 Hz, -CH=CH-P(O)(OMe)₂); 151,2 (s, C₀¹); 151,3 (d, ²*J*_{CP} = 6,9 Hz, C₁¹); 151,8 (d, ²*J*_{CP} = 6,4 Hz, C₂¹) ppm.

### Exemple 10 : Synthèse du dendrimère de troisième génération à terminaisons vinyl-diméthyl-phosphonates

Le tétraméthyl-méthylène-gem-diphosphonate (0,71 mmol, 165 mg) ainsi que de l'hydrure de sodium (0,71 mmol, 17,1 mg) sont mis en solution dans 5 mL de THF distillé, cette solution est laissée sous une forte agitation pendant 2 heures à température ambiante. Une fois le dégagement d'hydrogène fini, elle est additionnée lentement sur le dendrimère Gc'ₛ (1,35.10⁻² mmol, 200 mg) qui a été préalablement mis en solution dans 3 mL de THF distillé. L'addition est effectuée à 0°C puis on laisse le mélange revenir à température ambiante pendant une nuit. Le solide blanc est alors lavé avec un mélange pentane / éther 1/1 de manière à retirer l'excès de tétraméthyl-méthylène-gem-diphosphonate. Ensuite, le dendrimère est mis en suspension dans le minimum d'eau, la solution trouble obtenue est centrifugée. Une poudre blanche est récupérée après centrifugation mais il peut parfois être nécessaire de répéter une deuxième fois l'opération (centrifugation) toujours avec le minimum d'eau. Le produit final est isolé avec un rendement final de 72%. 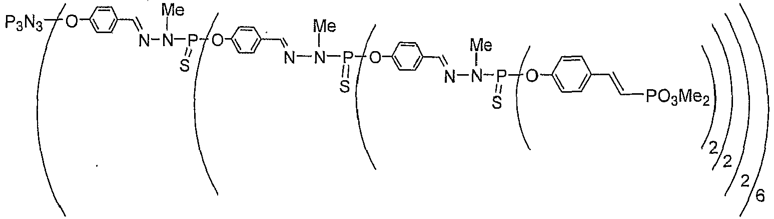 RMN ³¹P-{¹H} (CDCl₃) : δ = 11,7 (s, P₀); 65,3 (s, P₃); 66,0 (s, P_{1,2}); 25,5 (s, P=O) ppm.
RMN ¹H (CDCl₃) : δ = 3,29 (s large, 126H, N-Me); 3,68 (d, ³*J*_{HP} = 7,7 Hz, 288H, O-CH₃); 6,08 (dd, ³*J*_{HH} *ₜᵣₐₙₛ* = ²*J*_{HP(O)} = 17,6 Hz, 48H, -CH=CH-P(O)); 6,9-7,8 (m, 450H, CHₐᵣₒₘ, CH=N, -CH=CH-P(O)) ppm.
RMN ¹³C-{¹H} (CDCl₃) : δ = 33,0 (d, ²*J*_{CP} = 13,1 Hz, CH₃-N-P_{1,2,3}); 52,5 (d, ²*J*_{CP} = 5,5 Hz, -O-CH₃); 112,6 (d, ¹*J*_{CP} = 192,2 Hz, -CH=CH-P(O)(OMe)₂); 121,9 (d large, ³*J*_{CP} = 2,7 Hz, C₀², C₁², C₂², C₃²); 128,3 (s large, C₀³, C₁³, C₂³); 129,1 (s, C₃³); 131,9 (s large, C₀⁴, C₂⁴); 132,1 (s, C₁⁴); 132,2 (s, C₃⁴); 139,2 (d, ³*J*_{CP} = 13,2 Hz, CH=N); 148,3 (s large, -CH=CH-P(O)(OMe)₂); 151,3 (s, C₁¹, C₀¹); 151,8 (s, C₃¹); 152,0 (s, C₂¹) ppm.

### Exemple 11 : Synthèse 4-hydroxybenzyl-diméthyl-phosphonate

Les étapes a) à d) de cette synthèse multi-étapes étaient déjà décrites par J.D. Olsjewski et al J. Org. Chem. 1994, 59, 4285-4296.

### a) Synthèse du 4-tertiobutyldiméthylsilyl-benzaldéhyde

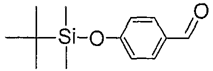

Le 4-hydroxy-benzaldéhyde (10g, 0,082 mol) est mis en solution dans 100 mL de dichlorométhane. On additionne à cette solution à température ambiante le chlorotriméthylsilane (11,72g, 0,078 mol) ainsi que de la diméthylaminopyridine (1g, 0,008mol) et de la triéthylamine (23 mL, 0,164 mol). L'ensemble est laissé à température ambiante 48 heures avec une agitation magnétique puis le solvant est évaporé sous pression réduite. Le solide obtenu est agité dans le pentane pur (3x200 mL), et on extrait ainsi le produit silylé.

### b) Synthèse du 4-tertiobutyldiméthylsilyl-benzaldéhyde

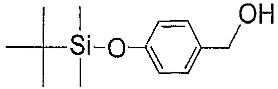

Le 4-tertiobutyldiméthylsilyl-benzaldéhyde (28g, 0,118 mol) est mis en solution dans un mélange THF/éthanol (50 ml/10ml). On additionne sur cette solution à température ambiante du borohydrure de sodium (9g, 0,237 mol) cette suspension est agitée sous argon et à température ambiante pendant 4 jours. Puis on évapore sous pression réduite tous les solvants du milieu réactionnel et on obtient ainsi un gel blanc très compact. Ce dernier est mis en suspension dans de l'éther puis on ajoute très lentement une solution de chlorhydrate d'ammonium saturée, jusqu'à obtention d'une solution plus homogène dans les deux phases. Lorsque les deux phases sont homogènes on sépare le produit final par simple décantation eau/éther. La phase éthérée est évaporée puis le produit obtenu est repris dans le pentane et lavé une fois à l'eau.

### c) Synthèse du 4-tertiobutyldiméthylisilyl-benzaldéhyde

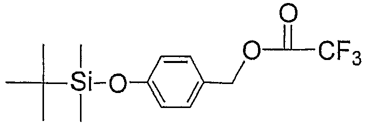

L'alcool benzylique (27g 0,113 mol) est mis en solution dans du THF (100 mL); sur cette solution on additionne l'anhydride trifluoroacétique (19,2 mL, 0,136 mol) à température ambiante. Puis l'ensemble est mis au reflux du THF pendant une heure. On laisse ensuite le mélange revenir lentement à température ambiante, et on évapore 75 % du THF puis on reprend l'ensemble dans de l'éther et on lave dans un premier temps avec une solution d'hydrogénocarbonate de sodium (2x100 mL) et une fois à l'eau (100 mL).

### d) Synthèse du 4-tertiobutyldiméthylsilyl-benzaldéhyde

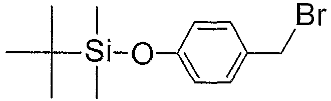

Le trifluoroacétate (35 g, 0,105 mol) est mis en solution dans du THF (100 mL), sur cette solution on additionne du bromure de lithium (11g, 0,126 mol) l'ensemble est mis au reflux du THF pendant 18 heures. On évapore le THF sous pression réduite puis on reprend le produit dans 40 mL d'acétonitrile et on fait une décantation à l'hexane (4x100 mL). L'hexane est évaporé et on obtient une huile blanchâtre contenant des cristaux blancs. Il faut alors récupérer l'huile en utilisant à nouveau l'hexane mais en filtrant ces cristaux. Le produit est isolé avec un rendement de 84 %.

### e) Synthèse du 4-tertiobutyldiméthylsilyl-benzyl-diméthyl-phosphonate

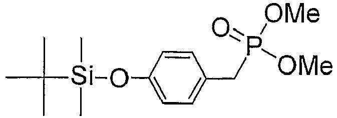

Le bromure de benzyle du 4-tertiobutyldiméthylsiloxane (2,72 mmol, 800 mg), est additionné au triméthylphosphite (4 mmol, 0,47 mL). Le triméthylphosphite est ajouté en plusieurs fois : dans un premier temps le premier équivalent est ajouté (0,32 mL) puis l'ensemble est porté à 80°C avec agitation et sans solvant. La réaction libère du bromure de méthyle qui doit être retiré pour permettre à la réaction d'être totale. Après 4 heures de reflux l'excès de triméthylphosphite est additionné (0,15 mL). Le mélange réactionnel est à nouveau porté à 80°C pendant 2 heures. Le mélange final contient des traces de triméthylphosphite qui peut être éliminé sous pression réduite à 80°C ainsi que le méthyl-diméthylphosphite, qui est un sous-produit dû à la formation de bromure de méthyle.
RMN ³¹P-{¹H} (CDCl₃) : δ = 32,6 (s, P) ppm.
RMN ¹H (CDCl₃) : δ = 0,17 (s, 6H, Si-CH₃); 0,97 (s, 9H, Si-tBu); 3,09 (d, ²*J*_{HP} = 21,2 Hz, 2H, -CH₂-); 3,63 (d, ²*J*_{HP} = 10,7 Hz, 6H, O-Me); 6,78 (d, ³*J*_{HH} = 8,5 Hz, 2H, CHₐᵣₒₘ); 7,15 (dd, ³*J*_{HH} = 8,5 Hz, ⁴*J*_{HP} = 2,5 Hz, 2H, CHₐᵣₒₘ) ppm.

### f) Synthèse 4-hydroxybenzyl-diméthyl-phosphonate

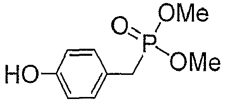

Le 4-hydroxybenzyl-diméthyl-phosphonate (2,72 mmol) est placé en solution dans du THF anhydre 5 mL, puis le fluorure de tétrabutylammonium en solution anhydre à 1 M dans le THF est additionné (5,4 mmol, 5,5 mL). Le mélange est laissé 48 heures à température ambiante. Sur ce mélange réactionnel sont additionnées quelques gouttes d'eau après 1 heure d'agitation le produit est lavé au pentane. Le produit est ensuite purifié par filtration sur silice en utilisant un gradient de solvant : éther pur dans un premier temps puis, avec un mélange Pentane/THF 1/1.

Le produit final est recristallisé dans le dichlorométhane, pour cela on le dissous dans un minimum de dichlorométhane à chaud puis on le laisse revenir très lentement à température ambiante et enfin à -20°C le produit est récupéré totalement pur, sous forme de cristaux blancs.
RMN ³¹P-{¹H} (CDCl₃) : δ = 32,4 (s, P) ppm.
RMN ¹H (CDCl₃) : δ = 3,07 (d, ²*J*_{HP} = 22,0 Hz, 2H, -CH₂-); 3,68 (d, ²*J*_{HP} = 10,8 Hz, 6H, O-Me); 6,64 (dd, ³*J*_{HH} = 8,6 Hz, ⁵*J*_{HP} = 0,78 Hz, 2H, CHₐᵣₒₘ); 7,04 (dd, ³*J*_{HH} = 8,6 Hz, ⁴*J*_{HP} = 2,8 Hz, 2H, CHₐᵣₒₘ); 7,68 (s large, 1 H, OH) ppm.
RMN ¹³C-{¹H} (CDCl₃) : δ = 31,7 (d, ¹*J*_{CP} = 139,6 Hz, -CH₂-P); 53,1 (d, ²*J*_{CP} = 6,9 Hz, -OMe); 116,0 (s, C₂); 120,8 (d, ²*J*_{CP} = 8,17 Hz, C₄); 130,7 (d, ³*J*_{CP} = 7,54 Hz, C₃), 156,0 (d, ⁵*J*_{CP} = 3,14 Hz, C₁) ppm.

### Exemple 12 : Synthèse d'un dendrimère de première génération à extrémités benzyl-diméthyl-phosphonate

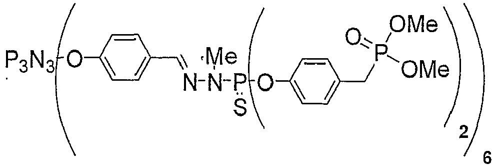

Le dendrimère de première génération à extrémités dichlorothiophosphine Gc₁ (0,109 mmol, 200 mg) est mis en solution dans du THF (2 mL); sur cette solution est additionné du carbonate de césium (2,6 mmol, 853 mg). Enfin, le 4-hydroxy-benzyl-diméthyl-phosphonate est ajouté (1,3 mmol, 282 mg). On laisse le mélange sous agitation pendant 24 heures à température ambiante. Puis on place l'échantillon sous vide jusqu'à obtention d'une poudre blanche qui est lavée avec un mélange pentane éther (1/1). Le produit final est isolé avec un rendement final de 73%.
RMN ³¹P-{¹H} (CDCl₃) : δ = 66,2 (s, P₁); 31,9 (s, P(O)(OMe)₂); 12,3 (s, P₀) ppm. RMN ¹H((CD₃)₂CO) : δ = 3,15 (d, ²*J*_{HP} = 21,5 Hz, 24H, CH₂); 3,32 (d, ³*J*_{HP} = 10,5 Hz, 18H, CH₃-N-P₁); 3,58 (d, ³*J*_{HP} = 10,9 Hz, 72H, P(O)-O-CH₃); 6,90-7,90 (m, 78H, Hₐᵣₒₘ, CH=N) ppm.
RMN ¹³C-{¹H} ((CD₃)₂CO) : δ = 31,85 (d, ¹*J*_{CP} = 136,4 Hz, -CH₂-P(O)(OMe)₂); 33,4 (d, ²*J*_{CP} = 16,8 Hz, CH₃-N-P₁); 52,8 (d, ²*J*_{CP} = 6,8 Hz, -O-CH₃); 121,9 (s large, C₀² et C₁²); 129,1 (s, C₀³); 130,3 (d, ²*J*_{CP} = 8,6 Hz, C₁⁴); 131,8 (d, ²*J*_{CP} = 6,18 Hz, C₁³); 133,3 (s, C₀⁴); 140,4 (d, ³*J*_{CP} = 14,04 Hz, CH=N); 150,3 (d large, ²*J*_{CP} = 3,8 Hz, C₁¹); 152,0 (d large, C₀¹) ppm.

### Exemple 13 : Synthèse d'un dendrimère de deuxième génération à extrémités benzyl-diméthyl-phosphonate

Le dendrimère de deuxième génération à extrémités dichlorothiophosphine Gc₂ (0,02 mmol, 100 mg) est mis en solution dans du THF (2 mL). Dans cette solution est additionné du carbonate de césium (1,5 mmol, 490 mg). Enfin, le 4-hydroxy-benzyl-diméthyl-phosphonate est ajouté (0,53 mmol, 113 mg). On laisse le mélange sous agitation pendant 24 heures à température ambiante. Puis on place l'échantillon sous vide jusqu'à obtention d'une poudre blanche qui est lavé avec un mélange pentane éther (1/1). Le produit final est isolé avec un rendement final de 78%. 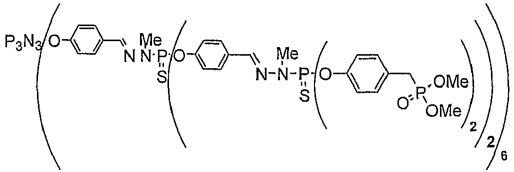 RMN ³¹P-{¹H} (CDCl₃) : δ = 66,0 (s, P₂); 65,9 (s, P₁); 31,8 (s, P(O)(OMe)₂); 11,8 (s, P₀) ppm.
RMN ¹H (CD₃)₂CO) : δ = 3,15 (d, ²*J*_{HP} = 22,2 Hz, 48H, CH₂); 3,25 (d, ³*J*_{HP} = 11,2 Hz, 54H, CH₃-N-P_{1,2}); 3,55 (d, ³*J*_{HP} = 10,8 Hz, 144H, P(O)-O-CH₃); 6,70-7,90 (m, 186H, Hₐᵣₒₘ, CH=N) ppm.
RMN ¹³C-{¹H} (CDCl₃) : δ = 32,1 (d, ¹*J*_{CP} = 138,6 Hz, -CH₂-P(O)(OMe)₂); 33,0 (d, ²*J*_{CP} = 12,2 Hz, CH₃-N-P_{1,2}); 52,9 (d, ²*J*_{CP} = 6,3 Hz, -O-CH₃); 121,4 (s, C₀²); 121,5 (s, C₁²); 121,6 (d large, ³*J*_{CP} = 3,5 Hz, C₂²); 128,3 (s, C₀³, C₁³); 128,4 (d, ²*J*_{CP} = 8,9 Hz, C₂⁴); 130,8 (d, ²*J*_{CP} = 6,5 Hz, C₂³); 132,1 (s, C⁴); 132,3 (s, C₁⁴); 138,6 (d, ³*J*_{CP} = 13,7 Hz, CH=N-N(Me)-P₂); 139,1 (d, ³*J*_{CP} = 12,8 Hz, CH=N-N(Me)-P₁); 149,6 (dd, ²*J*_{CP} = 6,1 Hz, ⁵*J*_{CP} = 3,8 Hz, C₂¹); 151,1 (s, C₀¹); 151,2 (d, ²*J*_{CP} = 7,6 Hz, C₁¹) ppm.

### Exemple 14 : Synthèse d'un dendrimère de troisième génération à extrémités benzyl-diméthyl-phosphonate

Le dendrimère de troisième génération à extrémités dichlorothiophosphine Gc₃ (0,014 mmol, 150 mg) est mis en solution dans du THF (2 mL). Dans cette solution est additionné du carbonate de césium (1,4 mmol, 460 mg). Enfin, le 4-hydroxy-benzyl-diméthyl-phosphonate est ajouté (0,71 mmol, 153 mg). On laisse le mélange sous agitation pendant 24 heures à température ambiante. Puis on place l'échantillon sous vide jusqu'à obtention d'une poudre blanche qui est lavée avec un mélange pentane éther (1/1). Le produit final est isolé avec un rendement final de 80%. 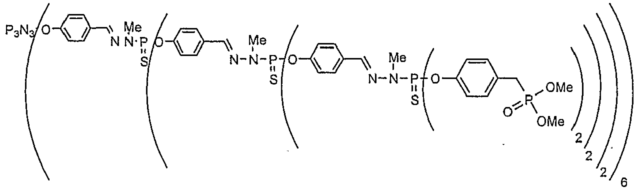 RMN ³¹P-{¹H} (CDCl₃) : δ = 66,0 (s, P_{1,2,3}); 31,9 (s, P(O)(OMe)₂); 11,5 (s, P₀) ppm. RMN ¹H (CDCl₃) : δ = 3,03 (d, ²*J*_{HP} = 21,5 Hz, 96H, CH₂); 3,23 (d, ³*J*_{HP} = 9,7 Hz, 126H, CH₃-N-P_{1,2,3}); 3,54 (d, ³*J*_{HP} = 10,8 Hz, 288H, P(O)-O-CH₃); 6,70-7,90 (m, 402H, Hₐᵣₒₘ, CH=N) ppm.
RMN ¹³C-{¹H} (CDCl₃) : δ = 31,8 (d, ¹*J*_{CP} = 122,5 Hz, -CH₂-P(O)(OMe)₂); 33,1 (s, CH₃-N-P_{1,2,3}); 52,9 (d, ²*J*_{CP} = 7,4 Hz, -O-CH₃); 121,2 (s, C₁²); 121,5 (s, C₃²); 121,7 (s large, C₂², C₀²); 128,3 (s, C₀³, C₁³, C₂³); 128,4 (d, ²*J*_{CP} = 10,1 Hz, C₃⁴); 130,5 (s, C₀⁴); 130,6 (s, C₁⁴); 130,8 (d, ²*J*_{CP} = 6,2 Hz, C₃³) 132,2 (s, C₂⁴); 138,7 (d large, ³*J*_{CP} = 13,6 Hz, CH=N-N(Me)-P_{1,2,3}); 148,3 (s large, C₀¹); 149,6 (dd, ²*J*_{CP} = 4,3 Hz, ⁵*J*_{CP} = 4,3 Hz, C₃¹); 151,2 (d, ²*J*_{CP} = 7,1 Hz, C₁¹, C₂¹) ppm.

### Exemple 15 : Synthèse d'un dendrimère de première génération à extrémités benzyl-phosphonique

Le dendrimère de première génération à extrémités benzyl-diméthyl-phosphonates (400 mg, 0,1 mmol) est mis en solution dans de l'acétonitrile (1 mL). Le mélange est refroidi à 0°C puis on additionne lentement le bromotriméthylsilane (386 µl, 2,9 mmol) soit 1,2 équivalent de silane par extrémités méthyle. Le mélange est laissé pendant 16 heures à température ambiante. Puis on met l'échantillon sous vide pendant deux heures. Après obtention d'une poudre on additionne du méthanol anhydre (1 mL), on agite la suspension pendant 2 heures, enfin on remet le produit sous vide pendant 1 heure. La poudre obtenue est lavée plusieurs fois à l'eau et à l'éther. Le produit final est isolé avec un rendement de 70%. 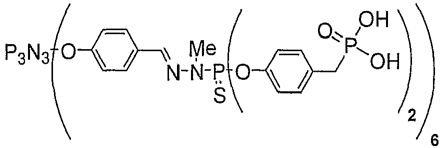 RMN ³¹P-{¹H} (DMSO d⁶) : δ = 66,1 (s, P₁); 25,2 (s, P(O)(OH)₂); 11,7 (s, P₀) ppm. RMN ¹H (DMSO d⁶) : δ = 2,89 (d, ²*J*_{HP} = 20,7 Hz, 24H, CH₂); 3,22 (d, ³*J*_{HP} = 10,6 Hz, 18H, CH₃-N-P₁); 4,0-5,2 (m, 24H, -PO₃H₂); 6,70-7,90 (m, 78H, Hₐᵣₒₘ, CH=N) ppm.
RMN ¹³C-{¹H} (DMSO d⁶) : δ = 32,8 (d, ²*J*_{CP} = 11,3 Hz, CH₃-N-P); 34,3 (d, ¹*J*_{CP} = 132,7 Hz, -CH₂-P(O)(OH)₂); 120,4 (s, C₁²); 120,9 (s, C₀²); 128,2 (s, C₀³); 130,9 (d, C₁³, ²*J*_{CP} = 6,8 Hz); 131,1 (s, C₁⁴); 132,1 (s, C₀⁴); 139,8 (d large, ³*J*_{CP} = 10,8 Hz, CH=N); 148,3 (d, ²*J*_{CP} = 7,2 Hz, C₁¹); 150,4 (s, C₀¹) ppm.

### Exemple 16 : Synthèse d'un dendrimère de seconde génération à extrémités benzyl-phosphonique

Le dendrimère de deuxième génération à extrémités benzyl-diméthyl-phosphonates (130 mg, 0,014 mmol) est mis en solution dans de l'acétonitrile (1 mL). Le mélange est refroidi à 0°C puis on additionne lentement le bromotriméthylsilane (101 µl, 0,76 mmol) soit 1,2 équivalent de silane par extrémités méthyle. Le mélange est laissé pendant 16 heures à température ambiante. Puis on met l'échantillon sous vide pendant deux heures. Après obtention d'une poudre on additionne du méthanol anhydre (1 mL), on agite la suspension pendant 2 heures, enfin on remet le produit sous vide pendant une heure. La poudre obtenue est lavée plusieurs fois à l'eau et à l'éther. Le produit final est isolé avec un rendement de 63%. 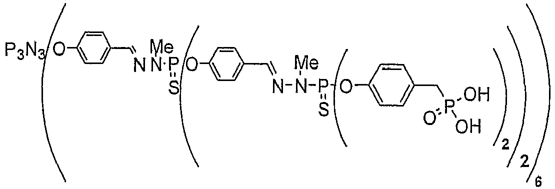 RMN ³¹P-{¹H} (DMSO d6/D₂O) : δ = 66,1 (s, P_{1,2}); 25,5 (s, P(O)(OH)₂); 11,9 (s, P₀) ppm.
RMN ¹H (DMSO d6/D₂O) : δ = 2,95 (s large, 48H, CH₂); 3,40-3,75 (m, 54H, CH₃-N-P_{1,2}); 6,50-7,30 (m, 186H, Hₐᵣₒₘ, CH=N) ppm.
RMN ¹³C-{¹H} (DMSO d6/D₂O) : 5δ = 32,9 (d, ²*J*_{CP} = 11,5 Hz, CH₃-N-P_{1,2}); 34,5 (d, ¹*J*_{CP} = 133,7 Hz, -CH₂-P(O)(OH)₂); 119,5 (s, C₀²); 120,4 (s, C₂²); 121,4 (s, C₁²); 128,2 (s, C₀³, C₁³); 131,0 (s large, C₂⁴, C₂³); 132,1 (s, C₀⁴, C₁⁴); 140,3 (d large, ³*J*_{CP} = 11,1 Hz, CH=N); 148,3 (d, ²*J*_{CP} = 3,6 Hz, C₂¹); 150,3 (s, C₀¹); 150,7 (s, ²*J*_{CP} = 6,0 Hz, C₁¹) ppm.

### Exemple 17 : Synthèse d'un dendrimère de troisième génération à extrémités benzyl-phosphonique

Le dendrimère de troisième génération à extrémités benzyl-diméthyl-phosphonates (200 mg, 0,01 mmol) est mis en solution dans de l'acétonitrile (1 mL). Le mélange est refroidi à 0°C puis on additionne lentement le bromotriméthylsilane (146 µl, 1,09 mmol) soit 1,1 équivalent de silane par extrémités méthyle. Le mélange est laissé pendant 16 heures à température ambiante. Puis, on met l'échantillon sous vide pendant deux heures. Après obtention d'une poudre on additionne du méthanol anhydre (1 mL), on agite la suspension pendant 2 heures, enfin on remet le produit sous vide pendant une heure. La poudre obtenue est lavée plusieurs fois à l'eau et à l'éther. Le produit final est isolé avec un rendement de 81%. 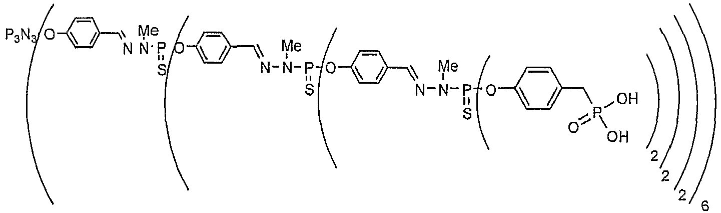 RMN ³¹P-{¹H} (DMSO d6) : δ = 66,1 (s, P_{1,2,3}); 25,1 (s, P(O)(OH)₂); 11,7 (s, P₀) ppm.
RMN ¹H (DMSO d6) : δ = 2,94 (d, ²*J*_{HP} = 23,1 Hz, 96H, CH₂); 3,10-3,40 (m, 126H, CH₃-N-P_{1,2,3}); 5,2-6,2 (m, 96H, -PO₃H₂); 7,00-8,10 (m, 402H, Hₐᵣₒₘ, CH=N) ppm.
RMN ¹³C-{¹H} (DMSO d6) : δ = 32,9 (d, ²*J*_{CP} = 12,2 Hz, CH₃-N-P_{1,2,3}); 34,5 (d, ¹*J*_{CP} = 132,1 Hz, -CH₂-P(O)(OH)₂); 119,5 (s, C₀²); 120,4 (s, C₃²); 120,6 (s, C₂²); 121,4 (s, C₁²); 128,3 (s, C₀³, C₁³, C₂³); 131,0 (s large, C₃⁴, C₃³); 132,1 (s large, C₀⁴, C₁⁴, C₂⁴); 140,3 (d large, ³*J*_{PC} = 10,4 Hz, CH=N); 148,3 (d, ²*J*_{CP} = 6,2 Hz, C₃¹); 150,6 (d large, ²*J*_{CP} = 7,2 Hz, C₀¹, C₁¹, C₂¹) ppm.

### Exemple 18 : Synthèse du dendrimère génération zéro (coeur P₃N₃) à extrémités α-hydroxy-diméthylphosphonate

A 301 mg de P₃N₃(OC₆H₄-CHO)₆ (0,35 mmol) en solution dans 1 ml de THF on additionne de la triéthylamine distillée (5 µl soit 0,42.10⁻³ mol), et du diméthylphosphite (196 µL soit 2,1.10⁻³ mol) (1 équiv par -CHO). On laisse le mélange pendant 12 heures sous agitation. La pâte obtenue est ensuite lavée avec un mélange THF/Et₂O : 1/1, pour donner une poudre blanche. Le produit final est isolé avec un rendement de 78%. 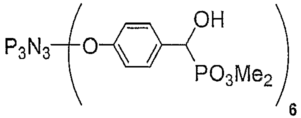 RMN ³¹P-{¹H} (DMSO d6) : δ = 11,5 (s, P₀), 27,2 (s, P(O)(O-CH₃)₂) ppm.

### Exemple 19 : Synthèse du dendrimère génération zéro à extrémités acide α-hydroxy-phosphonique

Le dendrimère de génération zéro de l'exemple 18 (4,78.10⁻² mmol, 72 mg) à extrémités α-hydroxy-diméthylphosphonate est mis en suspension dans l'acétonitrile (4 mL) avec de la triéthylamine (0,288 mmol, 10,25 µL) à 0°C. Puis le bromure de triméthylsilane (0,86 mmol, 115 µL) est additionné lentement à 0°C, l'ensemble revient lentement à température ambiante pendant 6 heures, puis on ajoute du méthanol anhydre (1 mL). Après 2 heures d'agitation le mélange réactionnel est séché sous pression réduite. Ensuite la poudre est mise en suspension dans un minimum d'eau pendant 30 minutes avec une forte agitation. Après filtration, le produit est séché puis lavé abondamment à l'éther. De préférence, pour obtenir un dendrimère soluble, le dendrimère final ne doit pas être totalement désolvaté. Le produit final est isolé avec un rendement de 60%. 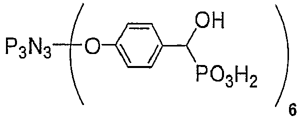 RMN ³¹P-{¹H} (DMSO d6) : δ = 11,3 (s, P₀), 22,0 (m, P(O)(OH)₂) ppm.
IR: Absence de υ(CHO) à 1670 cm⁻¹; υ(OH) à 3271 cm⁻¹.

### Exemple 20 : Synthèse d'un dendrimère de génération zéro à extrémités benzyl-diméthyl-phosphonate

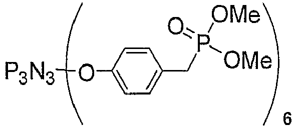

A une solution d'hexachlorocyclotriphosphazène (0,109 mmol, 38 mg) dans 2 mL de THF sont ajoutés du carbonate de césium (1,3 mmol, 427 mg) et du 4-hydroxy-benzyl-diméthyl-phosphonate (0,65 mmol, 141 mg). On laisse le mélange sous agitation pendant 24 heures à température ambiante. Après filtration, on place l'échantillon sous vide jusqu'à obtention d'une poudre blanche qui est lavée avec un mélange pentane / éther (1/1). Le produit final est isolé avec un rendement de 61%.
RMN ³¹P-{¹H} (CDCl₃) : δ = 12,2 (s, P₀); 31,8 (s, P(O)(OMe)₂) ppm.

### Exemple 21 : Synthèse d'un dendrimère de génération zéro à extrémités benzyl-phosphonique

Le dendrimère de génération zéro à extrémités benzyl-diméthyl-phosphonate de l'exemple 20 (126 mg, 0,1 mmol) est mis en solution dans de l'acétonitrile (1 mL). Le mélange est refroidi à 0°C puis on additionne lentement le bromotriméthylsilane (198 µl, 1,45 mmol) soit 1,2 équivalents de silane par extrémité méthyle. Le mélange est laissé pendant 16 heures à température ambiante, puis on met l'échantillon sous vide pendant deux heures. Après obtention d'une poudre on additionne du méthanol anhydre (1 mL), on agite la suspension pendant 2 heures, enfin on remet le produit sous vide pendant 1 heure. La poudre obtenue est lavée plusieurs fois à l'eau et à l'éther. Le produit final est isolé avec un rendement de 79%. 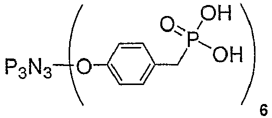 RMN ³¹P-{¹H} (DMSO d⁶) : δ = 11,8 (s, P₀); 25,1 (m, P(O)(OH)₂) ppm.

### Exemple 22 : Synthèse du (4-hydroxy-2-nitrophénylamino)methyl-diméthylphosphonate

A température ambiante sont mélangés 500 mg de 2-nitro-4-hydroxy-aniline, 1 mL de formaldéhyde en solution à 37% dans l'eau et 1,2 mL de diméthylphosphite. La solution rouge résultante est agitée à température ambiante pendant 96 heures. Le résidu brut est directement purifié par chromatographie sur gel de silice (éluant: diéthyl éther puis acétate d'éthyle). Le résidu rouge obtenu après chromatographie sur colonne est dilué dans 300 mL d'acétate d'éthyle puis lavé avec 50 mL d'eau. La phase organique est ensuite séchée sur sulfate de magnésium puis évaporée à sec pour donner le produit attendu sous forme d'une poudre rouge avec un rendement de 71%. 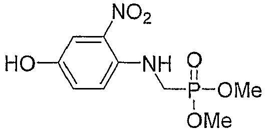 RMN ³¹P-{¹H} (Acétone) : δ = 28,7 (s, P(O)(OMe)₂) ppm.
RMN ¹H (Acétone) : δ = 3,8 (d, ³*J*_{HP} = 10,8 Hz, 6H, -OMe); 3,90 (d, ²*J*_{HP} = 12,6 Hz, 2H, N-CH₂-P); 5,9 (s large, 1H, -NH); 7,0-8,0 (m, 3H, CHₐᵣₒₘ) ppm.
RMN ¹³C-{¹H} (Acétone) : δ = 38,5 (d, ¹*J*_{CP} = 154,7 Hz, CH₂); 52,9 (d, ²*J*_{CP} = 6,0 Hz, OMe); 110,1 (S, Cₐᵣₒₘ); 116,5 (s, Cₐᵣₒₘ); 126,8 (s, Cₐᵣₒₘ); 132,6 (s, Cₐᵣₒₘ); 139,8 (s, Cₐᵣₒₘ); 148,3 (S, Carom) ppm.
[M+Na]⁺ = 299,2 g.mol⁻¹.

### Exemple 23 : Synthèse du dendrimère de première génération à coeur cyclotriphosphazène et à surface 2-nitrophénylaminométhyl-diméthylphosphonate

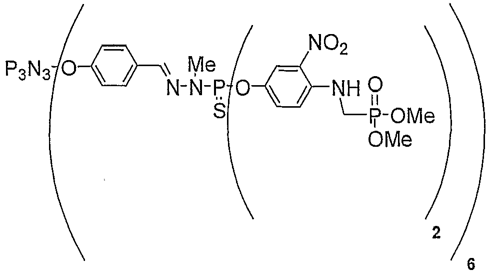

A une suspension de NaH (7 mg) dans le THF est additionnée à température ambiante 90 mg de phénol (4-hydroxy-2-nitrophénylamino)méthyl-diméthyl-phosphonate de l'exemple 22. Après une heure d'agitation, 30 mg de dendrimère de G_{C1} en solution dans 5 mL de THF anhydre sont additionnés. On laisse le mélange sous agitation pendant 24 heures à température ambiante puis on filtre sur célite et on centrifuge le mélange final de manière à séparer les sels. Enfin le produit final est lavé par précipitation dans du pentane et isolé avec un rendement de 82 %.
RMN ³¹P-{¹H} (CDCl₃) : δ = 66,1 (s, P₁); 28,6 (s, P(O)(OMe)₂); 11,9 (s, P₀) ppm. RMN ¹H (CDCl₃) : δ = 3,6 (d, ³*J*_{HP} = 14,6 Hz, 18H, CH₃-N-P₁); 3,78 (d, ³*J*_{HP} = 10,7 Hz, 72H, -P(O)(O-CH₃)₂); 3,9 (d, ²*J*_{Hp} = 12,6 Hz, 24H, -CH₂-P(O)(OCH₃)₂); 7,0-8,1 (m, 66H, CHₐᵣₒₘ, CH=N) ppm.

### Exemple 24 : Synthèse du dendrimère à coeur Cyclotriphosphazène de première génération à surface Aza-Mono-Phosphonique dérivé de l'allylamine

### a) synthèse du dendrimère à surface allylimine.

A une solution de 230 mg (80 µmol) de Gc'₁ dans le THF ou le CH₂Cl₂ (5 mL) sont ajoutés un large excès d'allyl amine (10 équivalents / CHO) puis du MgSO₄ (environ 2 grammes). La suspension est agitée 2 jours à température ambiante puis contrôlée par RMN ³¹P. Le mélange est filtré, (deux fois si besoin) et un large volume de pentane est ajouté. Le solvant est éliminé puis le solide est dissous dans un minimum de THF et précipité au pentane. La purification est réitérée 2 fois. Le solide obtenu est séché sous pression réduite. Le dendrimère à terminaison allyle imine est obtenu pur avec un rendement de 90 % sous la forme d'un solide blanc (240 mg). 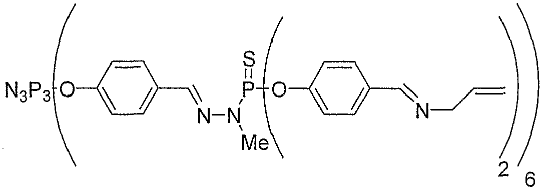 RMN ³¹P-{¹H} (CDCl₃) : δ = 12,3 (s); 65,6 (s)
RMN ¹H (CDCl₃) : δ = 3,23 (d, ³J_{HP} = 10,5 Hz, 18H); 4,18 (d, ³J_{HH} = 5,6 Hz, 24H); 5,21 (m, 24H), 6,01 (m, 12H); 6,98 (d, ³J_{HH} = 8,5 Hz, 12H); 7,21 (m, 26H); 7,60 (m, 40 H); 8,17 (s, 12H).

### b) synthèsè du dendrimère Aza-mono-Phosphonate Dérivé de l'allylamine.

Le dendrimère obtenu dans l'étape (a) est solubilisé dans un large excès de diméthyl phosphite. La solution homogène est agitée 72 heures à température ambiante. 10 mL d'éther distillé sont ajoutés à la solution. Après décantation, le solvant est éliminé et le solide est lavé par 3 fois avec 10 mL d'éther. Le solide est solubilisé dans un minimum de THF puis précipité par ajout de pentane. Le solide résiduel est séché sous pression réduite et le dendrimère à terminaison N-(allyl)-méthylphosphonate de diméthyle est obtenu pur avec un rendement de 80 % (poudre blanche). 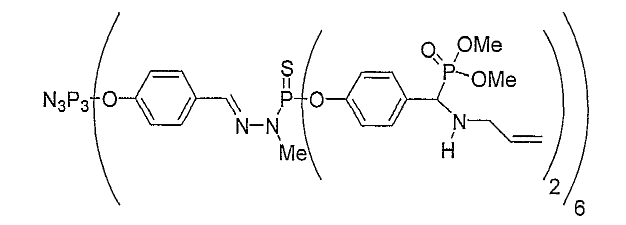 RMN ³¹P-{¹H} (CDCl₃) : δ = 11,5 (s); 28,9 (s); 65,5 (s).
RMN ¹H (CDCl₃) : δ = 2,00 (sl, NH); 2,99 (m, 12H); 3,21 (m, 12H); 3,30 (d, ³J_{HP} = 8,11 Hz, 18H); 3,45 (d, ³J_{HP} = 10,8 Hz, 36H); 3,64 (d, ³J_{HP} = 10,6 Hz, 36H); 4,02 (d, ²J_{HP} = 19,7 Hz, 12H); 5,01 (m, 24H); (,69 (m, 12H); 7,04 (d, ³J_{HH} = 6,7 Hz, 12H); 7,19 (d, ³J_{HH} = 6,3 Hz, 24H); 7,31 (d, ³J_{HH} = 5,5 Hz, 36H); 7,60 (d, ³J_{HP} = 6,2 Hz, 18H).

### c) Synthèse du dendrimère Aza-Mono-Phosphonique Dérivé de l'allylamine.

A une solution de 120 mg (25,8 µmol) de dendrimère N-(allyl)-méthylphosphonate de diméthyle de l'étape b) dans l'acétonitrile (5 mL) sont ajoutés lentement à 0°C 46 équivalents de BrTMS (160 µL). La solution est alors agitée 20 heures à température ambiante. Le solvant est évaporé sous pression réduite et le résidu est traité par 10 mL de méthanol. Après 1 heure de vigoureuse agitation dans le méthanol, le solide est séché sous pression réduite et lavé avec 2 fois 20 mL d'éther distillé. Le solvant est éliminé et une solution aqueuse de soude 0,1955 M (1,6 mL) est additionnée lentement. La solution homogène est lyophilisée et le dendrimère à terminaison N-(allyl)-acide méthylphosphonique (mono sel de sodium) est isolé sous forme d'une poudre blanche avec un rendement quantitatif. 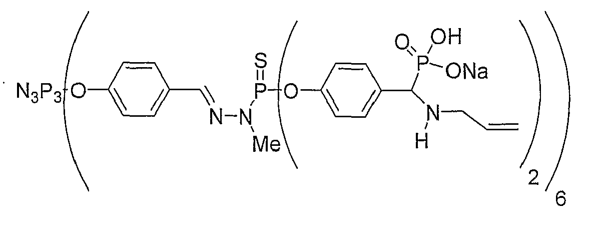 RMN ³¹P-{¹H} (CD₃CN/D₂O): δ = 8,9 (s); 10,3 (s); 65,2 (sl)

### Exemple 25 : Synthèse du dendrimère à coeur Cyclotriphosphazene de première génération à surface Aza-Mono-Phosphonique dérivé de la Benzylamine

### a) Synthèse du dendrimère à surface benzylimine.

A une solution de 160 mg (56 µmol) de Gc'₁ dans le CH₂Cl₂ (5 mL) sont ajoutés un large excès de benzylamine (10-12 équivalents / CHO) puis du MgSO₄ (environ 2-3 grammes). La suspension est agitée 24 heures à température ambiante. Le mélange est filtré, et un large volume de pentane est ajouté. Le solvant est éliminé puis le solide est dissous dans un minimum de THF et précipité au pentane. Le résidu est lavé avec deux fois 5 mL d'éther distillé et le solide obtenu est séché sous pression réduite. Le dendrimère à terminaison Benzylimine est obtenu pur avec un rendement de 90 % sous la forme d'un solide blanc. 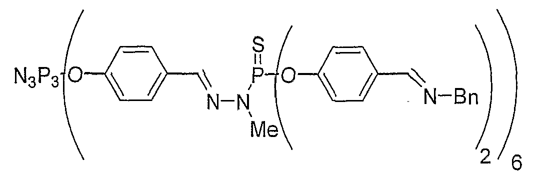 RMN ³¹P-{¹H} (CDCl₃) : δ = 12,1 (s); 65,6 (s).

### b) Dendrimère Aza-Mono-Phosphonate Dérivé de la Benzylamine

Le dendrimère précèdent à terminaisons imines est solubilisé dans un large excès de diméthyl phosphite (1 mL). La solution homogène est agitée 72 heures à température ambiante puis 10 mL d'éther distillé sont ajoutés à la solution. Après décantation, le solvant est éliminé et le solide est lavé avec 3 fois 10 mL d'éther. Le résidu est solubilisé dans un minimum de THF puis précipité par ajout de pentane. Le solide obtenu est séché sous pression réduite et le dendrimère à terminaison N-(benzyl)-méthylphosphonate de diméthyle est obtenu pur avec un rendement de 70 % (poudre blanche). 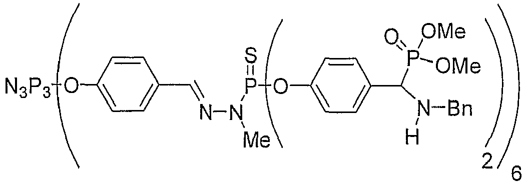 RMN ³¹P-{¹H} (CDCl₃) : δ = 11,5 (s); 28,7 (s); 65,6 (s)
RMN ¹H (CDCl₃) : δ = 2,33 (sl, NH); 3,28 (d, ³J_{HP} = 10,2 Hz, 18H); 3,46 (d, ³J_{HP} = 10,6 Hz, 36H); 3,44 (m, 12H); 3,64 (d, ³J_{HP} = 10,5 Hz, 36H); 3,74 (m, 12H); 3,98 (d, ²J_{HP} = 20,0 Hz, 12H); 7,03 (d, ³J_{HH} = 8,5 Hz, 12H); 7,23 (m, 78H); 7,35 (m, 30H); 7,61 (d, ³J_{HH} = 8,4 Hz, 18H).

### c) Dendrimère Aza-Mono-Phosphonique Dérivé de la Benzylamine

A une solution de 160 mg (30,5 µmol) de dendrimère N-(Benzyl)-méthylphosphonate de diméthyle dans l'acétonitrile de l'étape précédente (5 mL) sont ajoutés lentement à 0°C 46 équivalents de BrTMS (190 µL). La solution est alors agitée 20 heures à température ambiante. Le solvant est évaporé sous pression réduite et le résidu est traité par 10 mL de méthanol. Après 1 heure de vigoureuse agitation dans le méthanol, le solide est séché sous pression réduite. L'acide phosphonique est lavé avec 2 fois 20 mL d'éther distillé. Le solvant est éliminé et le dendrimère à extrémités acide phosphonique pur est traité lentement par une solution aqueuse de soude 0,1955 M (1,9 mL). La solution homogène est lyophilisée et le dendrimère à terminaison N-(Benzyl)-acide méthylphosphonique (mono sel de sodium) est isolé avec un rendement quantitatif sous forme d'une poudre blanche. 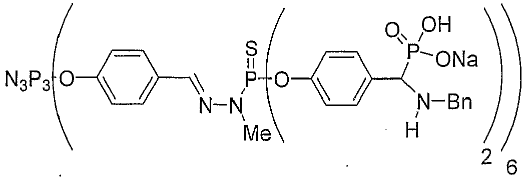 RMN ³¹P-{¹H} (CD₃CN/D₂O): δ = 8,8 (s); 10,3 (s); 65,1 (sl).

### Exemple 26 : Synthèse du dendrimère à coeur Cyclotriphosphazene de première génération à surface Aza-Mono-Phosphonique dérivé de la Méthylamine

### a) Dendrimère à surface méthylimine

A une solution de 200 mg (70 µmol) de Gc'₁ dans le THF (5 mL) sont ajoutés un large excès (10-12 équivalents / CHO) de méthylamine (en solution 8M dans l'éthanol) puis du MgSO₄ (environ 2 à 3 grammes). La suspension est agitée 20 heures à TA. Le mélange est filtré, et un large volume de pentane est ajouté. Le solvant est éliminé puis le solide est dissous dans un minimum de THF et précipité au pentane. Le résidu est lavé deux fois avec 5 mL d'éther distillé et le solide obtenu est séché sous pression réduite. Le dendrimère à terminaison méthylimine est obtenu pur avec un rendement de 85 % sous la forme d'un solide blanc. 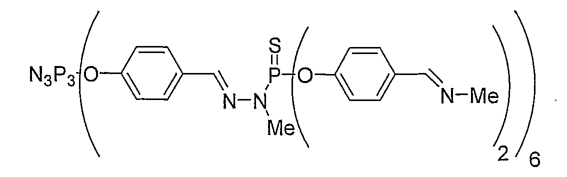 RMN ³¹P-{¹H} (CDCl₃) : δ = 12,1 (s); 65,5 (s)
RMN ¹H (CDCl₃) : δ = 3,23 (d, ³J_{HP} = 10,4 Hz, 18H); 3,44 (s, 36H); 6,98 (d, ³J_{HH} = 8,5 Hz, 12H); 7,20 (d, ³J_{HH} = 7,2 Hz, 24H); 7,58 (m, 42H); 8,15 et 8,16 (2s, 12H).

### b) Dendrimère Aza-Mono-Phosphonate Dérivé de la Méthylamine

Le dendrimère à terminaisons imine de l'étape précédente est solubilisé dans un large excès de diméthyl phosphite. La solution homogène est agitée 72 heures à température ambiante puis 10 mL d'éther distillé sont ajoutés. Après décantation, le solvant est éliminé et le solide est lavé avec 3 fois 10 mL d'éther. Le résidu est solubilisé dans un minimum de THF puis précipité par ajout de pentane. Le solide obtenu est séché sous pression réduite et le dendrimère à terminaison N-(méthyl)-méthylphosphonate de diméthyle est obtenu pur avec un rendement de 80 % (poudre blanche). 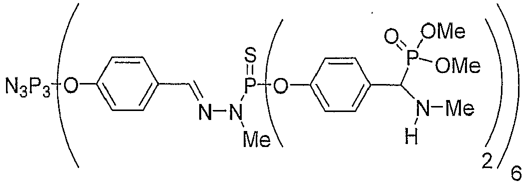 RMN ³¹P-{¹H} (CDCl₃) : δ = 11,5 (s); 29,0 (s); 65,2 (s).

### c) Dendrimère Aza-Mono-Phosphonique Dérivé de la Méthylamine

A une solution de 160 mg (37 µmol) de dendrimère N-(méthyl)-méthylphosphonate de diméthyle de l'étape précédente dans l'acétonitrile (5 mL) sont ajoutés lentement à 0°C 46 équivalents de BrTMS (230 µL). La solution est alors agitée 20 heures à température ambiante. Le solvant est évaporé sous pression réduite et le résidu est traité par 10 mL de méthanol. Après 1 heure de vigoureuse agitation dans le méthanol, le solide est séché sous pression réduite. L'acide phosphonique est lavé avec 2 fois 20 mL d'éther distillé. Le solvant est éliminé et le dendrimère à extrémités acide phosphonique pur est traité lentement par une solution aqueuse de soude 0,1955 M (2,3 mL). La solution homogène est lyophilisée et le dendrimère à terminaison N-(méthyl)-acide méthylphosphonique (mono sel de sodium) est isolé avec un rendement quantitatif sous forme d'une poudre blanche. 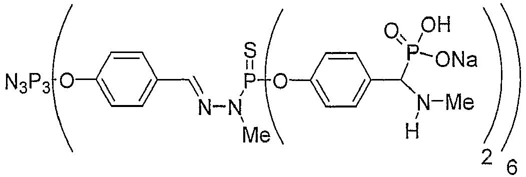 RMN ³¹P-{¹H} (CD₃CN/D₂O): δ = 8.9 (s); 10,5 (s); 65,1 (sl).

### Exemple 27 : Propriétés lubrifiantes

Les composés selon l'invention ont été testés dans un test de lubrification Falex (test de rupture) en contact acier/acier. Ce test a permis de mettre en évidence que les dendrimères fonctionnalisés bisphosphonates de l'invention peuvent être utilisés en tant qu'additif extrême pression de lubrification. Ces additifs dilués à hauteur de 1 % permettent d'obtenir un niveau de lubrification égal ou supérieur à un alkylester phosphate, souvent utilisé en tant qu'additif de lubrification.

## Revendications

1. Dendrimères de génération n constitués :
- d'un noyau central de valence m ;
- éventuellement des chaînes de générations en arborescence autour du noyau ;
- une chaîne intermédiaire à l'extrémité de chaque liaison autour du noyau, ou à l'extrémité de chaque chaîne de génération, le cas échéant ; et
- un groupe terminal à l'extrémité de chaque chaîne intermédiaire,
où m représente un entier compris entre 3 et 8 ; n représente un entier compris entre 0 et 12,
**caractérisés en ce que** le groupe terminal est constitué du groupe de formule : 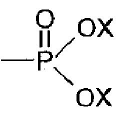 où chacun des X, identique ou différent représente un radical -Me, -H, et/ou -M⁺ où M⁺ est un cation,
à l'exclusion des composés de formule :
CH₃-CH₂-C[CH₂O-C(OSiMe₃)=CH-CH₂-P(=O)-(OH)₂]₃
CH₃-CH₂-C[CH₂O-C(OSiMe₃)=CH-CH₂-P(=O)-(OsiMe₃)₂]₃
CH₃-CH₂-C[CH₂O-C(OH)=CH-CH₂-P(=O)-(OH)₂]₃.

2. Dendrimères selon la revendication 1 tels que le noyau central est choisi parmi les groupes suivants :

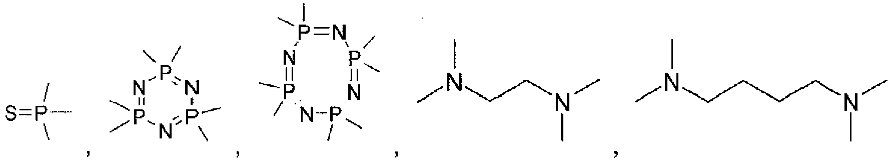

3. Dendrimères selon l'une quelconque des revendications précédentes tels que le noyau central est de formule:

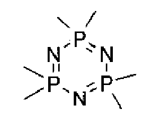

4. Dendrimères selon l'une quelconque des revendications précédentes tels qu'ils possèdent une structure de DAB-AM, PAMAM, PMMH.

5. Dendrimères selon l'une quelconque des revendications précédentes tels que M⁺ représente le cation d'un élément du groupe IA, IIA, IIB ou IIIA de la classification périodique ou M⁺ représente HNEt₃⁺.

6. Dendrimères selon l'une quelconque des revendications précédentes tels que M est choisi parmi les atomes de sodium et de potassium.

7. Dendrimères selon l'une quelconque des revendications précédentes tels que n est compris entre 0 et 3.

8. Dendrimères selon l'une quelconque des revendications précédentes tels que m est choisi parmi 3, 4 ou 6.

9. Dendrimères selon l'une quelconque des revendications précédentes tels que les chaînes de génération sont choisies parmi toute chaîne hydrocarbonée de 1 à 12 chaînons, linéaire ou ramifiée, contenant éventuellement une ou plusieurs double ou triple liaison, chacun desdits chaînons pouvant éventuellement être choisi parmi un hétéroatome, un groupe Aryle, Hétéroaryle, >C=0, >C=NR, chaque chaînon pouvant être éventuellement substitué par un ou plusieurs substituants choisi(s) parmi -Alkyle, -Hal, -NO₂, -NRR', -CN, -CF₃, -OH, -OAlkyle, -Aryle, -Aralkyle.
où
R et R', identiques ou différents, représentent indépendamment un atome d'hydrogène ou un radical -Alkyle, -Aryle, -Aralkyle ;

10. Dendrimères selon l'une quelconque des revendications précédentes tels que les chaînes de génération, identiques ou différentes, sont représentées par la formule :
-A-B-C(D)=N-N(E)-(P(=G)) < (C1)
où :
A représente un atome d'oxygène, soufre, phosphore ou un radical -NR- ;
B représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
C représente un atome de carbone ;
D et E, identiques ou différents, représentent indépendamment un atome d'hydrogène, un radical -Alkyle, -OAlkyle, -Aryle, -Aralkyle, chacun pouvant être éventuellement substitué par un atome d'Halogène ou un radical -NO₂, -NRR', -CN, -CF₃, -OH, -Alkyle, -Aryle, -Aralkyle ;
G représente un atome de soufre, oxygène, sélénium, tellure ou un radical =NR ;
R et R', identiques ou différents, représentent indépendamment un atome d'hydrogène ou un radical -Alkyle, -Aryle, -Aralkyle ;
< représente les deux liaisons à l'extrémité de chaque chaîne de génération.

11. Dendrimères selon la revendication 10 tels que A représente un atome d'oxygène.

12. Dendrimères selon l'une quelconque des revendications 10 ou 11 tels que B représente un noyau phényle, éventuellement substitué par un atome d'halogène ou un radical -NO₂, -NRR', -CN, -CF₃, -OH, -Alkyle, -Aryle, -Aralkyle.

13. Dendrimères selon l'une quelconque des revendications 10 à 12 tels que B représente un noyau phényle non substitué.

14. Dendrimères selon l'une quelconque des revendications 10 à 13 tels que D représente un atome d'hydrogène.

15. Dendrimères selon l'une quelconque des revendications 10 à 14 tels que E représente un radical -Alkyle.

16. Dendrimères selon l'une quelconque des revendications 10 à 15 tels que G représente un atome de soufre.

17. Dendrimères selon l'une quelconque des revendications 1 à 9 tels que les chaînes de génération sont représentées par la formule :
-A'-(C=O)-N(R)-B'-N< (C1')
où
A' et B' représentent indépendamment un radical -Alkyle, -Alkényle, -Alkynyle, par un ou plusieurs substituants choisi(s) parmi -Alkyle, -Hal, -NO₂, -NRR', -CN, -CF₃, -OH, -OAlkyle, -Aryle, -Aralkyle ;
R, R' sont définis comme précédemment.

18. Dendrimères selon l'une quelconque des revendications 1 à 9 tels que les chaînes de génération sont représentées par la formule :
-A"-N< (C1")
où
A" représente un radical -Alkyle, -Alkényle, -Alkynyle, par un ou plusieurs substituants choisi(s) parmi -Alkyle, -Hal, -NO₂, -NRR', -CN, -CF₃, -OH, -OAlkyle, -Aryle, -Aralkyle, où RR' sont définis comme précédemment.

19. Dendrimères selon l'une quelconque des revendications précédentes tels que les chaînes de génération sont identiques.

20. Dendrimères selon l'une quelconque des revendications précédentes tels que les chaînes intermédiaires, identiques ou différentes, sont représentées par la formule :
-J-K-L- (C2)
où
J représente un atome d'oxygène, soufre, ou un radical -NR- ;
K représente un radical -Aryle-, -Hétéroaryle-, -Alkyle-, chacun pouvant être éventuellement substitué par un atome d'Halogène ou un radical -NO₂, -NRR', -CN, -CF₃, -OH, -allyle, -Aryle, -Aralkyle ;
L représente une chaîne hydrocarbonée de 1 à 6 chaînons, contenant éventuellement un ou plusieurs hétéroatomes, et/ou contenant éventuellement une ou plusieurs double ou triple liaison, chacun desdits maillons pouvant éventuellement être substitué par un ou plusieurs substituants choisi parmi -OH, -NRR', -OAlkyle ;
R et R', identiques ou différents, représentent indépendamment un atome d'hydrogène ou un radical -Alkyle, -Aryle, -Aralkyle

21. Dendrimères selon l'une quelconque des revendications 10 à 20 tels que J et K sont respectivement égaux à A, B.

22. Dendrimères selon la revendication 20 tels que J représente un atome d'oxygène.

23. Dendrimères selon la revendication 20 ou 22 tels que K représente un noyau phényle, éventuellement substitué par un atome d'Halogène ou un radical-NO₂, -NRR', -CN, -CF₃, -OH, -Alkyle, -Aryle, -Aralkyle, -Alkyle, -Hal, -NO₂, -CN,-CF₃, -Aryle, -Aralkyle.

24. Dendrimères selon l'une quelconque des revendications 20, 22, 23 tels que K représente un noyau phényle non substitué.

25. Dendrimères selon l'une quelconque des revendications 20, 22 à 24 tels que L représente un radical -Alkyle-, -Alkènyle- ou -Alkynyle-, chacun pouvant être éventuellement substitué par un ou plusieurs substituants choisis parmi -OH, -NRR', -OAlkyle.

26. Dendrimères selon l'une quelconque des revendications 20, 22 à 25 tels que L représente un radical -Alkènyle- ou un radical -Alkyle-, éventuellement substitué par un radical -OH.

27. Dendrimères selon l'une quelconque des revendications 20, 22 à 26 tels que L représente un radical -Alkyle- éventuellement substitué par un radical -OH.

28. Dendrimères selon l'une quelconque des revendications 1 à 19, tels que les chaînes intermédiaires sont représentées par la formule (C2') :
-L"- (C2')
où L" représente une chaîne -Alkyle-de 1 à 6 chaînons, éventuellement substituée par un ou plusieurs substituants choisis parmi -OH, -NRR', -OAlkyle.

29. Dendrimères selon l'une quelconque des revendications précédentes, tels qu'ils sont représentés par la formule (I) :
§-{{A-B-C(D)=N-N(E)-(P(=G))<}ⁿ-[J-K-L-PO₃X₂]₂}ₘ (I)
dans laquelle :
§, A, B, C, D, E, G, N, P, J, K, L, X, m, n, < sont tels que définis selon les revendications précédentes.

30. Dendrimères selon l'une quelconque des revendications 1 à 28, tels qu'ils sont représentés par la formule (I-2) suivante :
§-{{A'-(C=0)-N(R)-B'-NH-}ⁿ[L"-PO₃X_{2]}}ₘ (I-2)
dans laquelle :
§, A', B', C, N, P, X, L", m, n sont définis comme précédemment.

31. Dendrimères selon l'une quelconque des revendications 1 à 28, tels qu'ils sont représentés par la formule (I-3) suivante :
§-{{A"-NH-}ⁿ[L"-PO₃X₂]}ₘ (I-3)
dans laquelle :
§, A", N, P, X, L", m, n sont définis comme précédemment.

32. Procédé de préparation d'un dendrimère selon l'une quelconque des revendications précédentes comprenant :
(i) la réaction du dendrimère correspondant présentant une fonction terminale -CHO, -CH=NR,ou (P(=S)Cl₂ avec
un composé de formule Z-PO₃Me₂, où Z représente respectivement :
- soit -H lorsque la fonction est-CHO ou -CH=NR,
- soit la chaîne intermédiaire précédemment définie lorsque ladite fonction représente -(P(=S)Cl₂ ;
(ii) suivie éventuellement, lorsque X représente H ou M, de l'étape consistant à transformer le dendrimère obtenu en (i) présentant une terminaison -PO₃Me₂ en le dendrimère correspondant présentant une terminaison -PO₃H₂ ;
(iii) suivie éventuellement, lorsque X représente M, de l'étape consistant à transformer le dendrimère obtenu en (ii) présentant une terminaison -PO₃H₂ en le sel du dendrimère correspondant présentant une terminaison -PO₃M₂.

33. Procédé de préparation des dendrimères selon l'une quelconque des revendications 27 à 29 de formule (I)
§-{{A-B-C(D)=N-N(E)-(P(=G))<}ⁿ[J-K-L-PO₃X₂]₂}ₘ (I)
dans laquelle :
§, A, B, C, D, E, G, N, P, J, K, L, X, m, n, < sont définis comme dans l'une quelconque des revendications précédentes, **caractérisé en ce que** ledit procédé comprend :
(i) l'étape consistant à faire agir sur le dendrimère correspondant de formule
§-{{A-B-C(D)=N-N(E)-(P(=G))<}ⁿY₂}ₘ (II-1)
où Y représente :
- soit -J-K-L', où L' représente un radical -CHO ou -CH=NR ;
- soit -Cl ;
un composé de formule Z-PO₃Me₂, où Z représente respectivement :
- soit H- lorsque Y représente -J-K-L' ;
- soit H-J-K-L- lorsque Y représente Cl ;
pour obtenir le dendrimère de formule (III-1) :
§-{{A-B-C(D)=N-N(E)-(P(=G))<}ⁿ[J-K-L-PO₃Me₂]₂}ₘ (II-1)
dans laquelle :
§, A, B, C, D, E, G, N, P, J, K, L, R, m, n, < sont définis comme précédemment,
(ii) suivie éventuellement, lorsque X représente H ou M, de l'étape consistant à transformer le dendrimère de formule (III-1) obtenu en (i) en le dendrimère correspondant de formule (I) dans laquelle X représente un atome d'hydrogène, selon le schéma réactionnel suivant : 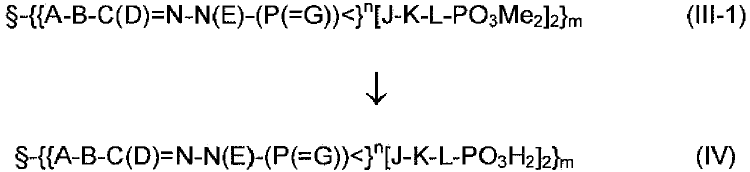 dans laquelle §, A, B, C, D, E, G, N, P, J, K, L, n, m, < sont définis comme précédemment,
(iii) suivie éventuellement, lorsque X représente M, de l'étape consistant à transformer le dendrimère de formule (IV) obtenu en (ii) en le sel correspondant de formule (I) où M représente un atome de métal.

34. Procédé selon la revendication 33 selon lequel l'étape (i) comprend la réaction suivante : 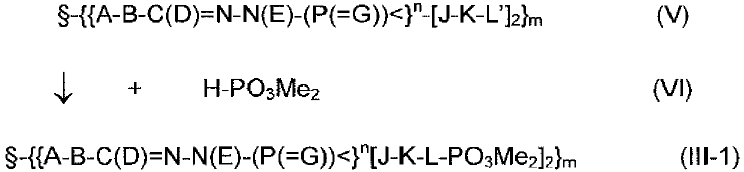
où §, A, B, C, D, E, G, N, P, J, K, L, L', m, n, < sont définis comme précédemment,
où ladite réaction est effectuée en présence d'une base organique ou inorganique, à une température comprise entre -80°C et 100°C.

35. Procédé selon la revendication 34 où la base est la triéthylamine.

36. Procédé selon la revendication 33, selon lequel l'étape (i) comprend la réaction suivante : 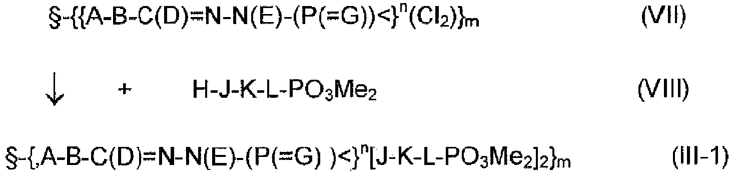 où
§, A, B, C, D, E, G, N, P, J, K, L, m, n sont définis comme précédemment,
où ladite réaction est effectuée en solution dans un solvant polaire, aprotique, en présence d'une base organique ou inorganique, à température comprise entre -80°C et 100°C.

37. Procédé selon la revendication 36 où la base est le carbonate de césium.

38. Procédé de préparation d'un dendrimère selon l'une quelconque des revendications 30 ou 31 de formule (I-2)
§-{{A'-(C=O)-N(R)-B'-NH-}ⁿ[L"-PO₃X₂]}ₘ (I-2)
Ou de formule (I-3) suivante :
§-{{A"-NH-}ⁿ[L"-PO₃X₂]₂}ₘ (I-3)
dans laquelle §, A', B', C, A", N, P, X, I", m, n sont définis comme précédemment,
comprenant
l'étape (i) comprenant la réaction sur le dendrimère correspondant n de formule
§-{{A'-(C=O)-N(R)-B'-N=R}ⁿ}ₘ (II-2)
ou
§-{{A"-N=R}ⁿ}ₘ (I-3)
où R est un radical >Alkyle,
avec un composé de formule H-PO₃Me₂ (VI).
(ii) suivie éventuellement, lorsque X représente H ou M, de l'étape consistant à transformer le dendrimère de formule (III-2) ou (III-3) obtenu en (i) dans laquelle X représente un radical Méthyle en le dendrimère correspondant de formule (I-2) ou (I-3) dans laquelle X représente un atome d'hydrogène, selon le schéma réactionnel suivant : 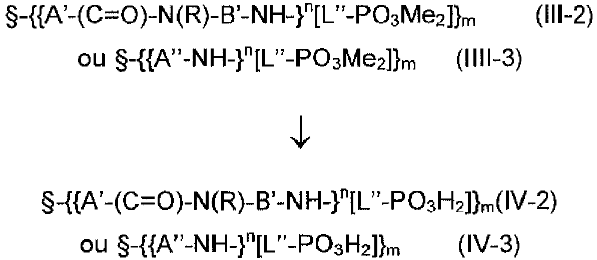
(iii) suivie éventuellement, lorsque X représente M, de l'étape consistant à transformer le dendrimère de formule (IV-2) ou (IV-3) obtenu en (ii) en le sel correspondant.

39. Procédé selon la revendication 38 tel que l'étape (i) est effectuée en présence d'une base organique ou inorganique, à une température comprise entre -80°c et 100°C.

40. Procédé selon l'une quelconque des revendications 32 à 39 selon lequel la réaction (ii) est effectuée :
- par action d'halogénure de triméthylsilane, dans un solvant organique aprotique, polaire,
- suivie de l'action de MeOH anhydre, ajouté au mélange réactionnel.

41. Procédé selon la revendication 40 pour lequel l'halogénure de triméthylsilane est Me₃SiBr.

42. Procédé selon l'une quelconque des revendications 32 à 41, dans lequel l'étape (iii) comprend la réaction consistant à faire agir les composés de formule (IV) en présence d'une base.

43. Procédé selon la revendication 42 selon lequel la base est choisie parmi l'hydroxyde de soude ou de potassium.

44. Composés de formule (VIII) :
Z-J-K-L-PO₃Me₂ (VIII)
dans laquelle
Z représente H ou un groupe protecteur de la fonction -JH ;
J représente un atome d'oxygène, soufre, ou un radical -NR- ;
K représente un radical -Aryle-, -Hétéroaryle-, -Alkyle-, chacun pouvant être éventuellement substitué par un atome d'Halogène ou un radical -NO₂, -NRR', -CN, -CF₃, -OH, -Alkyle, -Aryle, -Aralkyle ;
L représente une chaîne hydrocarbonée de 1 à 6 chaînons, linéaire ou ramifiée, chacun desdits chaînons pouvant éventuellement être choisis parmi un hétéroatome, et/ou contenant éventuellement une ou plusieurs double ou triple liaison, chacun desdits maillons pouvant éventuellement être substitué par un ou plusieurs substituants choisi parmi -OH, -NRR', -OAlkyle, -Alkyle, -Hal, -NO₂, -CN, -CF₃, -Aryle, -Aralkyle.

45. Composés selon la revendication 44, dans laquelle J représente un atome d'oxygène.

46. Composés selon la revendication 44 ou 45, dans laquelle K représente un noyau phényle, éventuellement substitué.

47. Composés selon l'une quelconque des revendications 44 à 46, dans laquelle K représente un noyau phényle non substitué.

48. Composés selon l'une quelconque des revendications 44 à 47, dans laquelle L représente un radical -Alkyle-, éventuellement substitué par un radical-OH, ou un radical -Alkényle-.

49. Composés selon l'une quelconque des revendications 44 à 48, dans laquelle L représente un radical -Alkyle-.

50. Procédé de préparation des composés de formule (VIII) selon l'une quelconque des revendications 44 à 49, dans laquelle Z représente un atome d'hydrogène comprenant l'étape comprenant la réaction suivante :
Z-J-K-L- PO₃Me₂ (VIII) → H-J-K-L- PO₃Me₂ (VIII)
où J, K, L sont définis comme dans l'une quelconque des revendications précédemment et Z représente un groupe protecteur de la fonction -JH,
par déprotection du groupe protecteur Z.

51. Procédé selon la revendication 50, dans laquelle Hal représente le brome.

52. Procédé selon la revendication 50 ou 51, comprenant l'étape consistant à faire agir du fluorure de tétrabutylammonium sur le composé de formule (X) correspondant, lorsque J représente un atome d'oxygène, Z représente le groupe TBDMS (radical tertio-butyl-diméthyl-silyle).

53. Procédé de préparation des composés de formule (VIII) selon l'une quelconque des revendications 50 à 52, dans laquelle le composé de formule (VIII) où Z représente le groupe protecteur de la fonction -JH, est obtenu par l'étape comprenant la réaction suivante :
Z-J-K-L-Hal (IX) → Z-J-K-L- PO₃Me₂ (VIII)
où J, K, L, Z sont définis comme dans l'une quelconque des revendications 50 à 52, où Hal représente un atome d'halogène,
par application ou adaptation de la réaction d'Arbuzow.

54. Procédé selon la revendication 53, dans laquelle le produit de formule (IX) est mis à réagir en présence de triméthylephosphite de formule P(OMe)₃ (X), à une température comprise entre -80°C et 150°C.

55. Utilisation des dendrimères selon l'une quelconque des revendications 1 à 31 pour traiter les surfaces ou être au contact de surfaces.

56. Utilisation selon la revendication 55, pour laquelle lesdites surfaces sont métalliques ou à base de silicium, ou d'oxydes.

57. Utilisation selon la revendication 55 ou 56 pour laquelle lesdits dendrimères sont utilisés comme additif dans une composition destinée au contact ou au traitement de ladite surface.

58. Utilisation selon l'une quelconque des revendications 55 à 57 selon laquelle lesdits dendrimères sont utilisés comme agent anti-corrosion, agent de lubrification, agent anti-tartre ou agent retardateur de feu.

## Patentansprüche

1. Dendrimere der Generation n, bestehend aus:
- einem zentralen Kern der Valenz m;
- wahlweise Ketten der Generationen in Baumstruktur um den Kern herum;
- eine Zwischenkette am Endpunkt jeder Bindung um den Kern herum oder am Endpunkt jeder Generationenkette, gegebenenfalls; und
- eine endständige Gruppe am Endpunkt jeder Zwischenkette,
wobei m eine ganze Zahl zwischen 3 und 8 darstellt; n eine ganze Zahl zwischen 0 und 12 darstellt,
**dadurch gekennzeichnet, dass** die endständige Gruppe aus einer Gruppe der Formel: 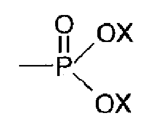 besteht, wobei jedes X, gleich oder verschieden, ein Radikal -Me, -H und/oder -M⁺ darstellt, wobei M⁺ ein Kation ist,
unter Ausschluss der Verbindungen der Formel:
CH₃-CH₂-C[CH₂O-C(OSiMe₃)=CH-CH₂-P(=O)-(OH)₂]₃
CH₃-CH₂-C[CH₂O-C(OSiMe₃)=CH-CH₂-P(=O)-(OSiMe₃)₂]₃
CH₃-CH₂-C[CH₂O-C(OH)=CH-CH₂-P(=)-(OH)₂]₃.

2. Dendrimere gemäß Anspruch 1, wobei der zentrale Kern ausgewählt ist aus den folgenden Gruppen:

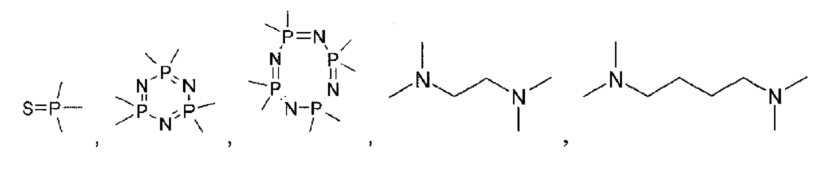

3. Dendrimere gemäß einem der vorangehenden Ansprüche, wobei der zentrale Kern die Formel: 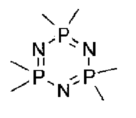 hat.

4. Dendrimere gemäß einem der vorangehenden Ansprüche, wobei sie eine Struktur von DAB-AM, PAMAM, PMMH besitzen.

5. Dendrimere gemäß einem der vorangehenden Ansprüche, wobei M⁺ das Kation eines Elements der Gruppe IA, IIA, IIB oder IIA des Periodensystems darstellt oder M⁺ HNEt₃⁺ darstellt.

6. Dendrimere gemäß einem der vorangehenden Ansprüche, wobei M ausgewählt ist aus Natrium- und Kaliumatomen.

7. Dendrimere gemäß einem der vorangehenden Ansprüche, wobei n zwischen 0 und 3 ist.

8. Dendrimere gemäß einem der vorangehenden Ansprüche, wobei m ausgewählt ist aus 3, 4 oder 6.

9. Dendrimere gemäß einem der vorangehenden Ansprüche, wobei die Ketten der Generation ausgewählt sind aus allen Kohlenwasserstoffketten mit 1 bis 12 Kettengliedern, linear oder verzweigt, wahlweise enthaltend eine oder mehrere Doppel- oder Dreifachbindungen, wobei die Kettenglieder wahlweise ausgewählt sein können aus einem Heteroatom, einer Aryl-, Heteroarylgruppe, >C=O, >C=NR, wobei das Kettenglied wahlweise substituiert sein kann mit einem oder mehreren Substituenten ausgewählt aus -Akyl, -Hal, NO₂, -NRR', -CN, - CF₃, -OH, -OAlkyl, -Aryl, -Aralkyl,
wobei
R und R', gleich oder verschieden, unabhängig ein Wasserstoffatom oder ein -Alkyl-, -Aryl-, -Aralkyl-Radikal darstellen.

10. Dendrimere gemäß einem der vorangehenden Ansprüche, wobei die Ketten der Generation, gleich oder verschieden, dargestellt sind durch die Formel:
-A-B-C(D)=N-N(E)-(P(=G)) < (C1)
wobei:
A ein Sauerstoff-, Schwefel-, Phosphoratom oder ein Radikal -NR- darstellt;
B ein -Aryl-, -Heteroaryl-, -Alkyl-Radikal darstellt, das wahlweise substituiert sein kann mit einem Halogenatom oder einem Radikal -NO₂, -NRR', -CN, -CF₃, -OH, -Alkyl, -Aryl, -Aralkyl;
C ein Kohlenstoffatom darstellt;
D und E, gleich oder verschieden, unabhängig ein Wasserstoffatom, ein -Alkyl-, -OAlkyl-, -Aryl-, -Aralyklradikal darstellen, das wahlweise substituiert sein kann mit einem Halogenatom oder einem Radikal -NO₂, -NRR', - CN, -CF₃, -OH, -Alkyl, -Aryl, -Aralkyl;
G ein Schwefel-, Sauerstoff-, Selen-, Telluratom oder ein Radikal =NR darstellt;
R und R', gleich oder verschieden, unabhängig ein Wasserstoffatom oder ein -Alkyl-, -Aryl-, -Aralkylradikal darstellen;
< die zwei Bindungen am Endpunkt jeder Kette der Generation darstellt.

11. Dendrimere gemäß Anspruch 10, wobei A ein Sauerstoffatom darstellt.

12. Dendrimere gemäß einem der Ansprüche 10 oder 11, wobei B einen Phenylring darstellt, wahlweise substituiert mit einem Halogenatom oder einem Radikal -NO₂, -NRR', - CN, -CF₃, -OH, -Alkyl, -Aryl, -Aralkyl.

13. Dendrimere gemäß einem der Ansprüche 10 bis 12, wobei B einen unsubstituierten Phenylring darstellt.

14. Dendrimere gemäß einem der Ansprüche 10 bis 13, wobei D ein Wasserstoffatom darstellt.

15. Dendrimere gemäß einem der Ansprüche 10 bis 14, wobei E ein -Alkylradikal darstellt.

16. Dendrimere gemäß einem der Ansprüche 10 bis 15, wobei G ein Schwefelatom darstellt.

17. Dendrimere gemäß einem der Ansprüche 1 bis 9, wobei die Ketten der Generation dargestellt sind durch die Formel:
-A'-(C=O)-N(R)-B'-N< (C1')
wobei
A' und B' unabhängig ein -Alkyl-, -Alkenyl-, -Alkinylradikal darstellen, durch einen oder mehreren Substituenten ausgewählt aus -Alkyl, -Hal, -NO₂, - NRR', -CN, -CF₃, -OH, -OAlkyl, Aryl, -Aralkyl;
R, R' wie vorangehend definiert sind.

18. Dendrimere gemäß einem der Ansprüche 1 bis 9, wobei die Ketten der Generation dargestellt sind durch die Formel:
-A"-N< (C1")
wobei
A" ein -Alkyl-, -Alkenyl-, -Alkinylradikal darstellt, durch einen oder mehreren Substituenten ausgewählt aus -Alkyl, -Hal, -NO₂, -NRR', -CN, -CF₃,-OH, -OAlkyl, Aryl, -Aralkyl, wobei RR' wie vorangehend definiert sind.

19. Dendrimere gemäß einem der vorangehenden Ansprüche, wobei die Ketten der Generation gleich sind.

20. Dendrimere gemäß einem der vorangehenden Ansprüche, wobei die Zwischenketten, gleich oder verschieden, dargestellt sind durch die Formel:
-J-K-L (C2)
wobei
J ein Sauerstoff-, Schwefelatom oder ein Radikal -NR- darstellt;
K ein -Aryl-, -Heteroaryl-, -Alkyl-Radikal darstellt, das wahlweise substituiert sein kann mit einem Halogenatom oder einem Radikal -NO₂, -NRR', - CN, -CF₃, -OH, -Alkyl, -Aryl, -Aralkyl;
L eine Kohlenwasserstoffkette mit 1 bis 6 Kettengliedern darstellt, enthaltend wahlweise ein oder mehrere Heteroatome, und/oder enthaltend wahlweise eine oder mehrere Doppel- oder Dreifachbindungen, wobei jene Glieder wahlweise substituiert sein können mit einem oder mehreren Substituenten ausgewählt aus -OH, NRR', -OAlkyl;
R und R', gleich oder verschieden, unabhängig ein Wasserstoffatom oder ein -Alkyl-, -Aryl-, -Aralkylradikal darstellen.

21. Dendrimere gemäß einem der Ansprüche 10 bis 20, wobei J und K jeweils gleich A, B sind.

22. Dendrimere gemäß Anspruch 20, wobei J ein Sauerstoffatom darstellt.

23. Dendrimere gemäß Anspruch 20 oder 22, wobei K einen Phenylring darstellt, wahlweise substituiert mit einem Halogenatom oder einem Radikal -NO₂, -NRR',-CN, -CF₃, -OH, -Alkyl, -Aryl, -Aralkyl, -Alkyl, -Hal, -NO₂, -CN, -CF₃, -Aryl,-Ar alkyl.

24. Dendrimere gemäß einem der Ansprüche 20, 22, 23, wobei K einen unsubstituierten Phenyhing darstellt.

25. Dendrimere gemäß einem der Ansprüche 20, 22 bis 24, wobei L ein -Alkyl-, -Alkenyl- oder -Alkinyl-Radikal darstellt, das wahlweise substituiert sein kann mit einem oder mehreren Substituenten ausgewählt aus -OH, -NRR', -OAlkyl.

26. Dendrimere gemäß einem der Ansprüche 20, 22 bis 25, wobei L ein -Alkenyl- Radikal oder ein Alkylradikal darstellt, wahlweise substituiert mit einem Radikal-OH.

27. Dendrimere gemäß einem der Ansprüche 20, 22 bis 26, wobei L ein -Alkyl-Radikal darstellt, wahlweise substituiert mit einem Radikal -OH.

28. Dendrimere gemäß einem der Ansprüche 1 bis 19, wobei die Zwischenketten dargestellt sind durch die Formel (C2'):
-L"- (C2')
wobei L" eine -Alkyl-Kette mit 1 bis 6 Kettengliedern darstellt, wahlweise substituiert mit einem oder mehreren Substituenten ausgewählt aus -OH, -NRR', - OAlkyl.

29. Dendrimere gemäß einem der vorangehenden Ansprüche, wobei sie dargestellt sind durch die Formel (I):
§-{{A-B-C(D)=N-N(E)-(P(=G))<}ⁿ-[J-K-L-PO₃X₂]₂}ₘ (I)
wobei:
§, A, B, C, D, E, G, N, P, J, K, L, X, m, n, < wie in den vorangehenden Ansprüchen definiert sind.

30. Dendrimere gemäß einem der Ansprüche 1 bis 28, wobei sie dargestellt sind durch die folgende Formel (1-2):
§-{{A'-(C=O)-N(R)-B'-NH-}ⁿ[L"-PO₃X₂]}ₘ (1-2)
wobei:
§, A', B', C, N, P, X, L", m, n wie vorangehend definiert sind.

31. Dendrimere gemäß einem der Ansprüche 1 bis 28, wobei sie dargestellt sind durch die folgende Formel (1-3):
§-{{A"-NH-}ⁿ[L"-PO₃X₂]}ₘ, (1-3)
wobei:
§, A", N, P, X, L", m, n wie vorangehend definiert sind.

32. Verfahren zur Herstellung eines Dendrimers gemäß einem der vorangehenden Ansprüche, umfassend:
(i) die Reaktion des entsprechenden Dendrimers mit einer endständigen Funktionalität -CHO, -CH=NR oder (P(=S)Cl₂
mit
einer Verbindung der Formel Z-PO₃Me₂, wobei Z jeweils:
- entweder, wenn Funktionalität -CHO oder -CH=NR ist, -H,
- oder, wenn die Funktionalität -(P(=S)Cl₂ darstellt, die vorangehend definierte Zwischenkette darstellt;
(ii) wahlweise, wenn X H oder M darstellt, gefolgt von dem Schritt bestehend aus Transformieren des aus (i) erhaltenen Dendrimers mit einer Endung -PO₃Me₂ in den entsprechenden Dendrimer mit einer Endung -PO₃H₂;
(iii) wahlweise, wenn X M darstellt, gefolgt von dem Schritt bestehend aus Transformieren des aus (ii) erhaltenen Dendrimers mit einer Endung -PO₃H₂ in das Salz des entsprechenden Dendrimers mit einer Endung -PO₃M₂.

33. Verfahren zur Herstellung von Dendrimeren gemäß einem der Ansprüche 27 bis 29 der Formel (I)
§-{{A-B-C(D)=N-N(E)-(P(=G))<}ⁿ[J-K-L-PO₃X₂]₂}ₘ (I)
wobei:
§, A, B, C, D, E, G, N, P, J, K, L, X, m, n, < wie in einem der vorangehenden Ansprüche definiert sind, **dadurch gekennzeichnet, dass** das Verfahren umfasst:
(i) den Schritt bestehend aus Reagieren-lassen des Dendrimers der Formel
§-{{A-B-C(D)=N-N(E)-(P(=G))<}ⁿY₂}ₘ (II-1)
wobei Y:
- entweder -J-K-L', wobei L' ein Radikal -CHO oder -CH=NR darstellt;
- oder -Cl darstellt;
mit einer Verbindung der Formel Z-PO₃Me₂, wobei Z jeweils:
- entweder, wenn Y -J-K-L' darstellt, H-;
- oder, wenn Y Cl darstellt, H-J-K-L' darstellt;
um den Dendrimer der Formel (III-1) zu erhalten:
§-{{A-B-C(D)=N-N(E)-(P(=G))<}ⁿ[J-K-L-PO₃Me₂]₂}ₘ (III-1)
wobei
§, A, B, C, D, E, G, N, P, J, K, L, R, m, n, < wie vorangehend definiert sind,
(ii) wahlweise, wenn Y H oder M darstellt, gefolgt von dem Schritt bestehend aus Transformieren des Dendrimers der Formel (III-1) erhalten in (i) in den entsprechenden Dendrimer der Formel (I), wobei X ein Wasserstoffatom darstellt, gemäß dem folgenden Reaktionsschema: 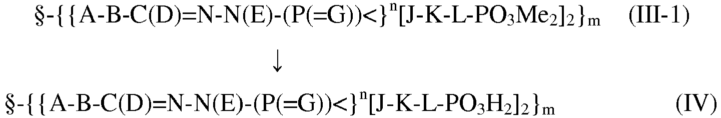 wobei §, A, B, C, D, E, G, N, P, J, K, L, n, m, < wie vorangehend definiert sind,
(iii) wahlweise, wenn X M darstellt, gefolgt von dem Schritt bestehend aus Transformieren des Dendrimers der Formel (IV) erhalten in (ii) in das entsprechende Salz der Formel (I), wobei M ein Metallatom darstellt.

34. Verfahren gemäß Anspruch 33, wobei der Schritt (i) die folgende Reaktion umfasst: 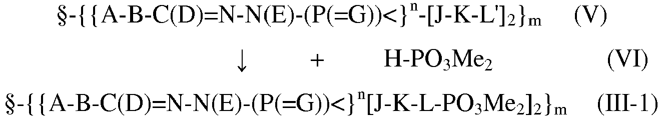 wobei §, A, B, C, D, E, G, N, P, J, K, L, L', m, n, < wie vorangehend definiert sind, wobei die Reaktion in Anwesenheit einer organischen oder anorganischen Base bei einer Temperatur zwischen -80 °C und 100 °C durchgeführt wird.

35. Verfahren gemäß Anspruch 34, wobei die Base Triethylamin ist.

36. Verfahren gemäß Anspruch 33, wobei der Schritt (i) die folgende Reaktion umfasst: 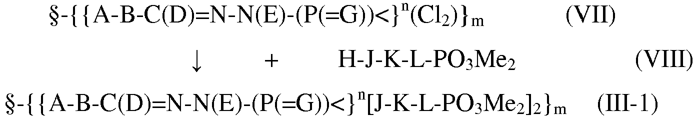 wobei §, A, B, C, D, E, G, N, P, J, K, L, m, n wie vorangehend definiert sind, wobei die Reaktion in Lösung in einem polaren, aprotischen Lösemittel in Anwesenheit einer organischen oder anorganischen Base bei einer Temperatur zwischen -80 °C und 100 °C durchgeführt wird.

37. Verfahren gemäß Anspruch 36, wobei die Base Cäsiumcarbonat ist.

38. Verfahren zur Herstellung eines Dendrimers gemäß einem der Ansprüche 30 oder 31 der Formel (1-2)
§-{{A'-(C=O)-N(R)-B'-NH-}ⁿ[L"-PO₃X₂]}ₘ (1-2)
oder der folgenden Formel (1-3):
§-{{A"-NH-}ⁿ[L"-PO₃X₂]₂}ₘ (1-3)
wobei §, A', B', C, A", N, P, X, L", m, n wie vorangehend definiert sind, umfassend
den Schritt (i) umfassend die Reaktion des entsprechenden Dendrimers der Formel
§-{{A'-(C=O)-N(R)-B'-N=R}ⁿ}ₘ (II-2)
oder
§-{{A"-N=R}ⁿ}ₘ (1-3)
wobei R ein >Alkylradikal ist,
mit einer Verbindung der Formel H-PO₃Me₂ (VI),
(ii) wahlweise, wenn X H oder M darstellt, gefolgt von dem Schritt bestehend aus Transformieren des Dendrimers der Formel (III-2) oder (III-3) erhalten in (i), wobei X ein Methylradikal in dem entsprechenden Dendrimer Formel (1-2) oder (I-3) darstellt, wobei X ein Wasserstoffatom darstellt, gemäß dem folgenden Reaktionsschema: 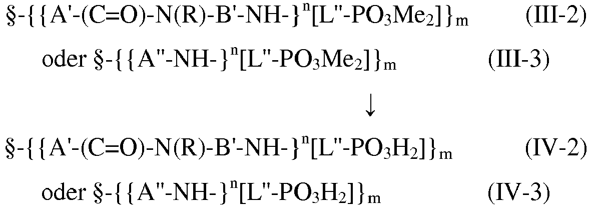
(iii) wahlweise, wenn X M darstellt, gefolgt von dem Schritt bestehend aus Transformieren des Dendrimers der Formel (IV-2) oder (IV-3) erhalten in (ii) in das entsprechende Salz.

39. Verfahren gemäß Anspruch 38, wobei Schritt (i) in Anwesenheit einer organischen oder anorganischen Base bei einer Temperatur zwischen -80 °C und 100 °C durchgeführt wird.

40. Verfahren gemäß einem der Ansprüche 32 bis 39, wobei die Reaktion (ii):
- durch Eiwirkung von Tumethylsilanhalogenid in einem organischen, aprotischen, polaren Lösemittel,
- gefolgt von Einwirkung von wasserfreiem MeOH, das der Reaktionsmischung zugegeben wird,
durchgeführt wird.

41. Verfahren gemäß Anspruch 40, wobei das Trimethylsilanhalogenid Me₃SiBr ist.

42. Verfahren gemäß einem der Ansprüche 32 bis 41, wobei der Schritt (iii) die Reaktion bestehend aus Reagieren-lassen der Verbindungen der Formel (IV) in Anwesenheit einer Base umfasst.

43. Verfahren gemäß Anspruch 42, wobei die Base ausgewählt ist aus Natrium- oder Kaliumhydroxid.

44. Verbindung der Formel (VIII):
Z-J-K-L-PO₃Me₂ (VIII)
wobei
Z H oder eine Schutzgruppe der Funktionalität -JH darstellt;
J ein Sauerstoff-, Schwefelatom oder ein Radikal -NR- darstellt;
K ein -Aryl-, -Heteroaryl-, -Alkyl-Radikal darstellt, das wahlweise substituiert sein kann mit einem Halogenatom oder einem Radikal -NO₂, -NRR', -CN, -CF₃, -OH, -Alkyl, -Aryl, -Aralkyl;
L eine Kohlenwasserstoffkette mit 1 bis 6 Kettengliedern, linear oder verzweigt, darstellt, wobei jedes Kettenglied wahlweise ausgewählt ist aus einem Heteroatom und/oder enthaltend wahlweise eine oder mehrere Doppel- oder Dreifachbindungen, wobei die Glieder wahlweise substituiert sein können mit einem oder mehreren Substituenten ausgewählt aus -OH, NRR', -OAlkyl, -Alkyl, -Hal, -NO₂, -CN, -CF₃, -Aryl, Aralkyl.

45. Verbindung gemäß Anspruch 44, wobei J ein Sauerstoffatom darstellt.

46. Verbindung gemäß Anspruch 44 oder 45, wobei K einen Phenylring darstellt, wahlweise substituiert.

47. Verbindung gemäß einem der Ansprüche 44 bis 46, wobei K einen unsubstituierten Phenylring darstellt.

48. Verbindung gemäß einem der Ansprüche 44 bis 47, wobei L ein -Alkyl-Radikal darstellt, wahlweise substituiert mit einem Radikal -OH-Radikal oder einem -Alkenyl-Radikal.

49. Verbindung gemäß einem der Ansprüche 44 bis 48, wobei L ein -Alkyl-Radikal darstellt.

50. Verfahren zur Herstellung von Verbindungen der Formel (VIII) gemäß einem der Ansprüche 44 bis 49, wobei Z ein Wasserstoffatom darstellt, umfassend den Schritt umfassend die folgende Reaktion:
Z-J-K-L-PO₃Me₂ (VIII) → H-J-K-L-PO₃Me₂ (VIII)
wobei J, K, L wie in einem der vorangehenden Ansprüche definiert sind und Z eine Schutzgruppe der Funktionalität -JH darstellt,
zum Entschützen der Schutzgruppe Z.

51. Verfahren gemäß Anspruch 50, wobei Hal Brom darstellt.

52. Verfahren gemäß Anspruch 50 oder 51, umfassend den Schritt bestehend aus Reagieren-lassen von Tetrabutylammoniumfluorid mit der entsprechenden Verbindung der Formel (X), wenn J ein Sauerstoffatom darstellt, Z die Gruppe TBDMS (tert-Butyldimethylsilyl-Radikal) darstellt.

53. Verfahren zur Herstellung von Verbindungen der Formel (VIII) gemäß einem der Ansprüche 50 bis 52, wobei die Verbindung der Formel (VIII), wobei Z die Schutzgruppe der Funktionalität -JH darstellt, erhalten wird durch den Schritt umfassend die folgende Reaktion:
Z-J-K-L-Hal (IX) → Z-J-K-L-PO₃Me₂ (VIII)
wobei J, K, L, Z wie in einem der Ansprüche 50 bis 52 definiert sind, wobei Hal ein Halogenatom darstellt,
zur Durchführung oder Abwandlung der Arbuzow-Reaktion.

54. Verfahren gemäß Anspruch 53, wobei das Produkt der Formel (IX) in Anwesenheit von Trimethylphosphit der Formel P(OME₃) (X) bei einer Temperatur zwischen -80 °C und 150 °C umgesetzt wird.

55. Verwendung von Dendrimeren gemäß einem der Ansprüche 1 bis 31 zum Behandeln von Oberflächen oder um mit Oberflächen in Kontakt zu sein.

56. Verwendung gemäß Anspruch 55, wobei die Oberflächen metallisch oder auf Silizium- oder Oxidbasis sind.

57. Verwendung gemäß Anspruch 55 oder 56, wobei die Dendrimere als Additiv in einer Zusammensetzung verwendet werden, die für den Kontakt oder die Behandlung der Oberfläche vorgesehen ist.

58. Verwendung gemäß einem der Ansprüche 55 bis 57, wobei die Dendrimere als Antikorrosionsmittel, Gleitmittel, Antikesselsteinmittel oder Flammschutzmittel verwendet werden.

## Claims

1. Dendritic polymers of generation n consisting of:
- a central core of valence m;
- optionally generation chains branching around the core;
- an intermediate chain at the end of each bond around the core or at the end of each generation chain, where appropriate; and
- a terminal group at the end of each intermediate chain,
wherein m represents an integer from 3 to 8; n represents an integer from 0 to 12, **characterised in that** the terminal group is consisting of the group of formula: 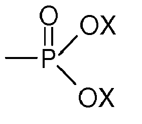 wherein each of the radicals X, which may be identical or different, represents a radical -Me, -H and/or -M⁺, wherein M⁺ is a cation,
with the exception of the compounds of formula:
CH₃-CH₂-C[CH₂O-C(OSiMe₃)=CH-CH₂-P(=O)-(OH)₂]₃
CH₃-CH₂-C[CH₂O-C(OSi Me₃)=CH-CH₂-P(=O)-(OSiMe₃)₂]₃
CH₃-CH₂-C[CH₂O-C(OH)=CH-CH₂-P(=O)-(OH)₂]₃.

2. Dendritic polymers according to claim 1, wherein the central core is selected from the following groups:

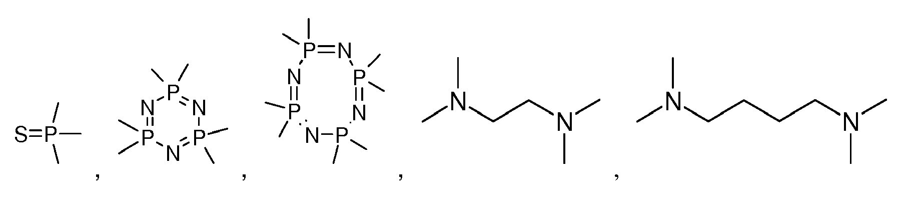

3. Dendritic polymers according to any one of the preceding claims, wherein the central core has the formula:

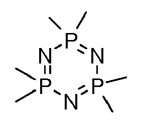

4. Dendritic polymers according to any one of the preceding claims having a DAB-AM, PAMAM, PMMH structure.

5. Dendritic polymers according to any one of the preceding claims, wherein M⁺ represents the cation of an element of group IA, IIA, IIB or IIIA of the periodic table or M⁺ represents HNEt₃⁺.

6. Dendritic polymers according to any one of the preceding claims, wherein M is selected from sodium and potassium atoms.

7. Dendritic polymers according to any one of the preceding claims, wherein n is from 0 to 3.

8. Dendritic polymers according to any one of the preceding claims, wherein m is selected from 3, 4 and 6.

9. Dendritic polymers according to any one of the preceding claims, wherein the generation chains are selected from any linear or branched hydrocarbon chain having from 1 to 12 chain members and optionally containing one or more double or triple bonds, it being possible for each of said chain members optionally to be selected from a heteroatom, a group Aryl, Heteroaryl, >C=O, >C=NR, it being possible for each chain member to be optionally substituted by one or more substituents selected from -Alkyl, -Hal, -NO₂, -NRR', -CN, -CF₃, -OH, -OAlkyl, -Aryl, -Aralkyl,
wherein
R and R', which may be identical or different, each independently of the other represents a hydrogen atom or a radical -Alkyl, -Aryl, -Aralkyl.

10. Dendritic polymers according to any one of the preceding claims, wherein the generation chains, which may be identical or different, are represented by formula:
-A-B-C(D)=N-N(E)-(P(=G))< (C1)
wherein:
A represents an oxygen, sulfur or phosphorus atom or a radical -NR-;
B represents a radical -Aryl-, -Heteroaryl-, -Alkyl-, each of which may optionally be substituted by a Halogen atom or by a radical -NO₂, -NRR', -CN, -CF₃, -OH, -Alkyl, -Aryl, -Aralkyl;
C represents a carbon atom,
D and E, which may be identical or different, each independently of the other represents a hydrogen atom, a radical -Alkyl, -OAlkyl, -Aryl, -Aralkyl, each of which may optionally be substituted by a Halogen atom or by a radical -NO₂, -NRR', -CN, -CF₃, -OH, -Alkyl, -Aryl, -Aralkyl;
G represents a sulfur, oxygen, selenium or tellurium atom or a radical =NR;
R and R', which may be identical or different, each independently of the other represents a hydrogen atom or a radical -Alkyl, -Aryl, -Aralkyl;
< represents the two bonds at the end of each generation chain.

11. Dendritic polymers according to claim 10, wherein A represents an oxygen atom.

12. Dendritic polymers according to claim 10 or 11, wherein B represents a phenyl ring optionally substituted by a halogen atom or by a radical -NO₂, -NRR', -CN, -CF₃, -OH, -Alkyl, -Aryl, -Aralkyl.

13. Dendritic polymers according to any one of claims 10 to 12, wherein B represents an unsubstituted phenyl ring.

14. Dendritic polymers according to any one of claims 10 to 13, wherein D represents a hydrogen atom.

15. Dendritic polymers according to any one of claims 10 to 14, wherein E represents a radical -Alkyl.

16. Dendritic polymers according to any one of claims 10 to 15, wherein G represents a sulfur atom.

17. Dendritic polymers according to any one of claims 1 to 9, wherein the generation chains are represented by formula:
-A'-(C=O)-N(R)-B'-N< (C1')
wherein
A' and B' each independently of the other represents a radical -Alkyl, -Alkenyl, -Alkynyl, by one or more substituents selected from -Alkyl, -Hal, -NO₂, -NRR', -CN, -CF₃, -OH, -OAlkyl, -Aryl, -Aralkyl;
R, R' have the meaning defined hereinbefore.

18. Dendritic polymers according to any one of claims 1 to 9, wherein the generation chains are represented by formula:
-A"-N< (C1")
wherein
A" represents a radical -Alkyl, -Alkenyl, -Alkynyl, by one or more substituents selected from -Alkyl, -Hal, -NO₂, -NRR', -CN, -CF₃, -OH, -OAlkyl, -Aryl, -Aralkyl, wherein RR' have the meaning defined hereinbefore.

19. Dendritic polymers according to any one of the preceding claims, wherein the generation chains are identical.

20. Dendritic polymers according to any one of the preceding claims, wherein the intermediate chains, which may be identical or different, are represented by formula:
-J-K-L- (C2)
wherein
J represents an oxygen atom, a sulfur atom or a radical -NR-;
K represents a radical -Aryl-, -Heteroaryl-, -Alkyl-, each of which may optionally be substituted by a Halogen atom or by a radical -NO₂, -NRR', -CN, -CF₃, -OH, -Alkyl, -Aryl, -Aralkyl;
L represents a hydrocarbon chain having from 1 to 6 chain members and optionally containing one or more heteroatoms and/or optionally containing one or more double or triple bonds, it being possible for each of said chain members to be optionally substituted by one or more substituents selected from -OH, -NRR', -OAlkyl;
R and R', which may be identical or different, each independently of the other represents a hydrogen atom or a radical -Alkyl, -Aryl, -Aralkyl.

21. Dendritic polymers according to any one of claims 10 to 20, wherein J and K are equal to A and B, respectively.

22. Dendritic polymers according to claim 20, wherein J represents an oxygen atom.

23. Dendritic polymers according to claim 20 or 22, wherein K represents a phenyl ring optionally substituted by a Halogen atom or by a radical -NO₂, -NRR', -CN, -CF₃, -OH, -Alkyl, -Aryl, -Aralkyl, -Alkyl, -Hal, -NO₂, -CN, -CF₃, -Aryl, -Aralkyl.

24. Dendritic polymers according to any one of claims 20, 22, 23, wherein K represents an unsubstituted phenyl ring.

25. Dendritic polymers according to any one of claims 20, 22 to 24, wherein L represents a radical -Alkyl-, -Alkenyl- or -Alkynyl-, each of which may optionally be substituted by one or more substituents selected from -OH, -NRR', -OAlkyl.

26. Dendritic polymers according to any one of claims 20, 22 to 25, wherein L represents a radical -Alkenyl- or a radical -Alkyl-, optionally substituted by a radical -OH .

27. Dendritic polymers according to any one of claims 20, 22 to 26, wherein L represents a radical -Alkyl- optionally substituted by a radical -OH.

28. Dendritic polymers according to any one of claims 1 to 19, wherein the intermediate chains are represented by formula (C2') :
-L"- (C2')
wherein L" represents an -Alkyl- chain having from 1 to 6 chain members, optionally substituted by one or more substituents selected from -OH, -NRR', -OAlkyl.

29. Dendritic polymers according to any one of the preceding claims which are represented by formula (I):
§-{{A-B-C(D)=N-N(E)-(P(=G))<}ⁿ-[J-K-L-PO₃X₂]₂}ₘ (I)
in which:
§, A, B, C, D, E, G, N, P, J, K, L, X, m, n, < have the meaning defined according to the preceding claims.

30. Dendritic polymers according to any one of claims 1 to 28 which are represented by the following formula (I-2):
§-{{A'-(C=O)-N(R)-B'-NH-}ⁿ[L"-PO₃X₂]}ₘ (I-2)
in which:
§, A', B', C, N, P, X, L", m, n have the meaning defined hereinbefore.

31. Dendritic polymers according to any one of claims 1 to 28 which are represented by the following formula (I-3):
§-{{A"-NH-}ⁿ[L"-PO₃X₂]}ₘ (I-3)
in which:
§, A", N, P, X, L", m, n have the meaning defined hereinbefore.

32. Method for preparing a dendritic polymer according to any one of the preceding claims, comprising:
(i) reacting the corresponding dendritic polymer having a terminal function -CHO, -CH=NR or (P(=S)Cl₂
with
a compound of formula Z-PO₃Me₂, wherein Z represents:
- either -H when the function is -CHO or -CH=NR,
- or the intermediate chain defined hereinbefore when said function represents -(P(=S)Cl₂ ;
(ii) optionally followed, when X represents H or M, by a step which comprises converting the dendritic polymer obtained in (i) having a -PO₃Me₂ termination into the corresponding dendritic polymer having a -PO₃H₂ termination;
(iii) optionally followed, when X represents M, by a step which comprises converting the dendritic polymer obtained in (ii) having a -PO₃H₂ termination into the salt of the corresponding dendritic polymer having a -PO₃M₂ termination.

33. Method for preparing dendritic polymers according to any one of claims 27 to 29 of formula (I)
§-{{A-B-C(D)=N-N(E)-(P(=G))<}ⁿ[J-K-L-PO₃X₂]₂}ₘ (I)
in which:
§, A, B, C, D, E, G, N, P, J, K, L, X, m, n, < have the meaning defined in any one of the preceding claims, **characterised in that** said method comprises:
(i) a step which comprises treating the corresponding dendritic polymer of formula
§"{{A-B-C(D)=N-N(E)-(P(=G))<}ⁿY₂}ₘ (II-1)
wherein Y represents:
- either -J-K-L', wherein L' represents a radical -CHO or -CH=NR;
- or -Cl;
with a compound of formula Z-PO₃Me₂, wherein Z represents:
- either H- when Y represents -J-K-L';
- or H-J-K-L- when Y represents Cl;
in order to obtain a dendritic polymer of formula (III-1):
§-{{A-B-C(D)=N-N(E)-(P(=G))<}ⁿ[J-K-L-PO₃Me₂]₂}ₘ (III-1)
in which:
§, A, B, C, D, E, G, N, P, J, K, L, R, m, n, < have the meaning defined hereinbefore,
(ii) optionally followed, when X represents H or M, by a step which comprises converting the dendritic polymer of formula (III-1) obtained in (i) into the corresponding dendritic polymer of formula (I) in which X represents a hydrogen atom, according to the following reaction scheme: 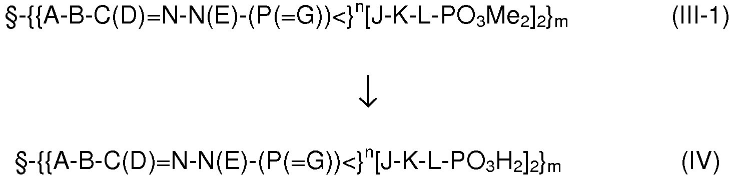 in which §, A, B, C, D, E, G, N, P, J, K, L, n, m, < have the meaning defined hereinbefore,
(iii) optionally followed, when X represents M, by a step which comprises converting the dendritic polymer of formula (IV) obtained in (ii) into the corresponding salt of formula (I) wherein M represents a metal atom.

34. Method according to claim 33, according to which step (i) comprises the following reaction: 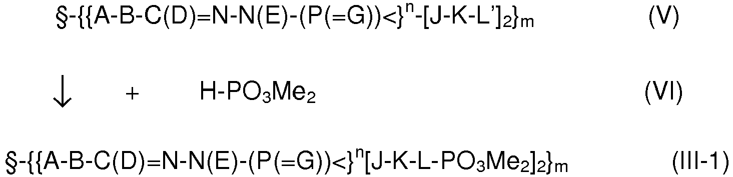
wherein §, A, B, C, D, E, G, N, P, J, K, L, L', m, n, < have the meaning defined hereinbefore,
wherein said reaction is carried out in the presence of an organic or inorganic base, at a temperature of from -80°C to 100°C.

35. Method according to claim 34, wherein the base is triethylamine.

36. Method according to claim 33, according to which step (i) comprises the following reaction: 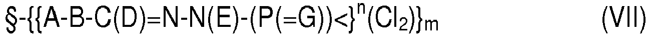 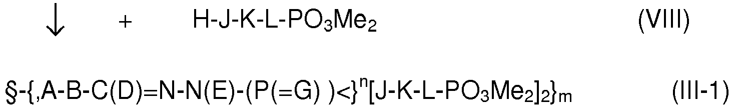 wherein
§, A, B, C, D, E, G, N, P, J, K, L, m, n have the meaning defined hereinbefore,
wherein said reaction is carried out in solution in a polar aprotic solvent, in the presence of an organic or inorganic base, at a temperature of from -80°C to 100°C.

37. Method according to claim 36, wherein the base is caesium carbonate.

38. Method for preparing a dendritic polymer according to either claim 30 or claim 31 of formula (I-2)
§-{{A'-(C=O)-N(R)-B'-NH-}ⁿ[L"-PO₃X₂]}ₘ (I-2)
or of the following formula (I-3):
§-{{A"-NH-}ⁿ[L"-PO₃X₂]₂}ₘ (I-3)
in which §, A', B', C, A", N, P, X, L", m, n have the meaning defined hereinbefore, comprising
step (i), which comprises reacting the corresponding dendritic polymer n of formula
§-{{A'-(C=O)-N(R)-B'-N=R}ⁿ}ₘ (II-2)
or
§-{{A"-N=R}ⁿ}ₘ (I-3)
wherein R is a radical >Alkyl,
with a compound of formula H-PO₃Me₂ (VI),
(ii) optionally followed, when X represents H or M, by a step which comprises converting the dendritic polymer of formula (III-2) or (III-3) obtained in (i) in which X represents a Methyl radical into the corresponding dendritic polymer of formula (I-2) or (I-3) in which X represents a hydrogen atom, according to the following reaction scheme:
§-{{A'-(C=O)-N(R)-B'-NH-}ⁿ[L"-PO₃Me₂]}ₘ (III-2) 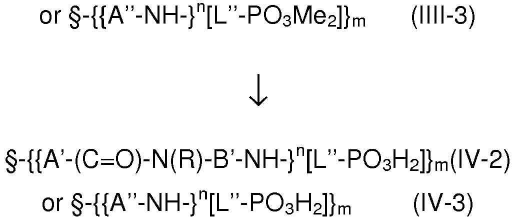
(iii) optionally followed, when X represents M, by a step which comprises converting the dendritic polymer of formula (IV-2) or (IV-3) obtained in (ii) into the corresponding salt.

39. Method according to claim 38, wherein step (i) is carried out in the presence of an organic or inorganic base, at a temperature of from -80°C to 100°C.

40. Method according to any one of claims 32 to 39, according to which reaction (ii) is carried out:
- by the action of a trimethylsilane halide, in a polar aprotic organic solvent,
- followed by the action of anhydrous MeOH, which is added to the reaction mixture.

41. Method according to claim 40, wherein the trimethylsilane halide is Me₃SiBr.

42. Method according to any one of claims 32 to 41, wherein step (iii) comprises a reaction in which the compounds of formula (IV) are made to act in the presence of a base.

43. Method according to claim 42, according to which the base is selected from sodium or potassium hydroxide.

44. Compounds of formula (VIII):
Z-J-K-L-PO₃Me₂ (VIII)
in which
Z represents H or a protecting group for the function -JH;
J represents an oxygen atom, a sulfur atom or a radical -NR-;
K represents a radical -Aryl-, -Heteroaryl-, -Alkyl-, each of which may be optionally substituted by a Halogen atom or by a radical -NO₂, -NRR', -CN, -CF₃, -OH, -Alkyl, -Aryl, -Aralkyl;
L represents a linear or branched hydrocarbon chain having from 1 to 6 chain members, it being possible for each of said chain members optionally to be selected from a heteroatom, and/or optionally containing one or more double or triple bonds, it being possible for each of said chain members to be optionally substituted by one or more substituents selected from -OH, -NRR', -OAlkyl, -Alkyl, -Hal, -NO₂, -CN, -CF₃, -Aryl, -Aralkyl.

45. Compounds according to claim 44, wherein J represents an oxygen atom.

46. Compounds according to claim 44 or 45, wherein K represents an optionally substituted phenyl ring.

47. Compounds according to any one of claims 44 to 46, in which K represents an unsubstituted phenyl ring.

48. Compounds according to any one of claims 44 to 47, in which L represents a radical -Alkyl- optionally substituted by a radical -OH, or L represents a radical -Alkenyl-.

49. Compounds according to any one of claims 44 to 48, in which L represents a radical -Alkyl-.

50. Method for preparing compounds of formula (VIII) according to any one of claims 44 to 49, in which Z represents a hydrogen atom, which method comprises a step comprising the following reaction:
Z-J-K-L- PO₃Me₂ (VIII) → H-J-K-L- PO₃Me₂ (VIII)
wherein J, K, L have the meaning defined in any one of the preceding claims and Z represents a protecting group for the function -JH,
by deprotecting the protecting group Z.

51. Method according to claim 50, in which Hal represents bromine.

52. Method according to claim 50 or 51, comprising a step in which tetrabutylammonium fluoride is made to act on the corresponding compound of formula (X), when J represents an oxygen atom, Z represents the group TBDMS (tert-butyl-dimethyl-silyl radical).

53. Method for preparing compounds of formula (VIII) according to any one of claims 50 to 52, in which the compound of formula (VIII) wherein Z represents the protecting group for the function -JH is obtained by a step which comprises the following reaction:
Z-J-K-L-Hal (IX) → Z-J-K-L- PO₃Me₂ (VIII)
wherein J, K, L, Z have the meaning defined in any one of claims 50 to 52, wherein Hal represents a halogen atom,
by application or adaptation of Arbuzow's reaction.

54. Method according to claim 53, in which the product of formula (IX) is reacted in the presence of trimethyl phosphite of formula P(OMe)₃ (X), at a temperature of from -80°C to 150°C.

55. Use of the dendritic polymers according to any one of claims 1 to 31 for treating surfaces or being in contact with surfaces.

56. Use according to claim 55, wherein said surfaces are metal, silica-based or oxide-based.

57. Use according to claim 55 or 56, for which said dendritic polymers are used as an additive in a composition that is to be in contact with or to treat said surface.

58. Use according to any one of claims 55 to 57, according to which said dendritic polymers are used as an anti-corrosive agent, a lubricating agent, a scale preventer or a flame retardant.
